(19) Europäisches Patentamt
European Patent Office
Office européen des brevets

(11) **EP 4 625 439 A1**

(12) **EUROPEAN PATENT APPLICATION**
published in accordance with Art. 153(4) EPC

(43) Date of publication:
**01.10.2025 Bulletin 2025/40**

(21) Application number: **23894624.8**

(22) Date of filing: **22.11.2023**

(51) International Patent Classification (IPC):
***H01B 1/06*** *(2006.01)* ***C08G 18/08*** *(2006.01)*
***C08K 3/08*** *(2006.01)* ***C08L 75/04*** *(2006.01)*
***H01M 4/62*** *(2006.01)* ***H01M 10/052*** *(2010.01)*
***H01M 10/0565*** *(2010.01)*

(52) Cooperative Patent Classification (CPC):
**C08G 18/08; C08K 3/08; C08L 75/04; H01B 1/06; H01M 4/62; H01M 10/052; H01M 10/0565;**
Y02E 60/10

(86) International application number:
**PCT/JP2023/041952**

(87) International publication number:
**WO 2024/111620 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 JP 2022188750**

(71) Applicant: **CANON KABUSHIKI KAISHA**
**Tokyo 146-8501 (JP)**

(72) Inventors:
- **ARIMURA, Hideya**
**Tokyo 146-8501 (JP)**
- **KOMATSU, Hiroaki**
**Tokyo 146-8501 (JP)**
- **MATSUNAGA, Kenta**
**Tokyo 146-8501 (JP)**
- **YAMANE, Souya**
**Tokyo 146-8501 (JP)**
- **YAMADA, Masaki**
**Tokyo 146-8501 (JP)**

(74) Representative: **TBK**
**Bavariaring 4-6**
**80336 München (DE)**

(54) **POLYMER ELECTROLYTE, ELECTRODE ACTIVE MATERIAL BINDER, AND SECONDARY BATTERY**

(57) This polymer electrolyte is characterized by comprising polyurethane, a lithium salt, and anions, and is characterized in that the polyurethane has a three-dimensional crosslinking structure and has a cationic structure within the molecule.

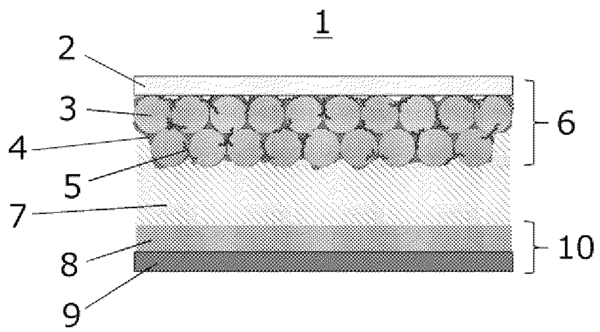


FIG. 1

EP 4 625 439 A1

Processed by Luminess, 75001 PARIS (FR)

## Description

TECHNICAL FIELD

The present disclosure is directed to polymer electrolyte, electrode active material binder, and secondary battery.

BACKGROUND ART

Lithium ion secondary batteries are in wide use as batteries for portable devices because the amount of electricity that can be taken out per battery volume or weight is significantly large compared with those of other secondary batteries. A lithium ion secondary battery consists of a positive electrode, a negative electrode, and an electrolyte. Currently, organic electrolytic solutions are mainly used as electrolytes for lithium secondary batteries, but organic solvents that are used in the electrolytic solutions are often flammable. Therefore, from the viewpoint of a safety issue in a case where the electrolytic solution has leaked, attention has been paid to solid electrolytes obtained by solidifying electrolytes. As the solid electrolytes, oxide-based, sulfide-based, and polymer-based materials have been widely studied.

Among these, oxide-based and sulfide-based solid electrolytes have relatively high ion conductivity, but it is difficult to enlarge the interface with an active material in an electrode.

Therefore, proposals have been made to use polymer electrolytes for which a urethane resin is used since, compared with oxide-based or sulfide-based solid electrolytes, it is easy to enlarge the interface with an active material and the mechanical properties are excellent.

PTL 1 describes a polymer electrolyte for which a polyurethane resin having a number average molecular weight of 1,000 to 500,000 that is obtained by reacting a polyether diol and an organic diisocyanate as essential components and a lithium salt are used.

CITATION LIST

PATENT LITERATURE

[PTL 1] Japanese Patent Application Publication No. 2016-69388

SUMMARY OF INVENTION

TECHNICAL PROBLEM

In recent years, for lithium ion secondary batteries, there has been a demand for higher charge and discharge characteristics in addition to high safety. According to the present inventors' studies, it was observed that the polyurethane that is comprisedin the polymer electrolyte composition according to PTL 1 easily softens at high temperatures and has a strength that tends to decrease. In secondary batteries in which such a polymer electrolyte is used as, for example, a bulk electrolyte, it is considered that a short circuit occurs when an impact is applied thereto due to the strength of the polyurethane decreasing under high temperature environments.

Therefore, the inventors studied to introduce a three-dimensional cross-linked structure into a polyurethane in a polymer electrolyte in order to suppress a decrease in strength under high temperature environments and to more reliably prevent the occurrence of a short circuit in a case where an impact is applied under high temperature environments. In that process, it was found that the ion conductivity of the polymer electrolyte comprising a polyurethane having a three-dimensional cross-linked structure decreases in some cases.

At least one aspect of the present disclosure is directed to providing a polymer electrolyte that is capable of maintaining an excellent strength even under high temperature environments and has high ion conductivity. In addition, at least one aspect of the present disclosure is directed to providing an electrode active material binder that is capable of maintaining an excellent strength even under high temperature environments and has high ion conductivity. Furthermore, at least one aspect of the present disclosure is directed to providing a secondary battery that exhibits excellent rate characteristics and has excellent impact resistance.

SOLUTION TO PROBLEM

According to at least one aspect of the present disclosure, there is provided a polymer electrolyte,

wherein the polymer electrolyte comprising a polyurethane, a lithium salt and an anion,
the polyurethane has a three-dimensional cross-linked structure and has a cationic structure in a molecule.

Additionally, according to at least one aspect of the present disclosure, there is provided an electrode active material binder comprising the polymer electrolyte of the present disclosure.

Moreover, according to at least one aspect of the present disclosure, there is provided a secondary battery comprising a positive electrode, a negative electrode and a bulk electrolyte disposed between the positive electrode and the negative electrode, wherein at least one selected from the group consisting of the positive electrode, the negative electrode, and the electrolyte comprises the above polymer electrolyte.

ADVANTAGEOUS EFFECTS OF INVENTION

According to at least one aspect of the present disclosure, it is possible to obtain a polymer electrolyte that is capable of maintaining an excellent strength even under high temperature environments and has high ion conductivity. In addition, according to at least one aspect of the present disclosure, it is possible to obtain an electrode active material binder that is capable of maintaining an excellent strength even under high temperature environments and has high ion conductivity. Furthermore, according to at least one aspect of the present disclosure, it is possible to obtain a secondary battery that exhibits excellent rate characteristics and has excellent impact resistance.

BRIEF DESCRIPTION OF DRAWINGS

[Fig. 1] The schematic cross-sectional view of a secondary battery in which a polymer electrolyte of the present disclosure is used as a bulk electrolyte.

[Fig. 2] The schematic cross-sectional view of a secondary battery in which the polymer electrolyte of the present disclosure is used as a binder for a positive electrode active material.

[Fig. 3] The schematic cross-sectional view of a secondary battery in which the polymer electrolyte of the present disclosure is used as a binder for a positive electrode active material, a bulk electrolyte, and a binder for a negative electrode active material.

DESCRIPTION OF EMBODIMENTS

In the present disclosure, the expression of "from XX to YY" or "XX to YY" indicating a numerical range means a numerical range including a lower limit and an upper limit which are end points, unless otherwise specified. In addition, when a numerical range is described in a stepwise manner, the upper and lower limits of each numerical range can be arbitrarily combined. In addition, in the present disclosure, for example, descriptions such as "at least one selected from the group consisting of XX, YY and ZZ" mean any of XX, YY, ZZ, the combination of XX and YY, the combination of XX and ZZ, the combination of YY and ZZ, and the combination of XX, YY, and ZZ.

One example of a secondary battery in which a polymer electrolyte of the present disclosure is used will be shown in Figs. 1 to 3. A secondary battery 1 shown in Fig. 1 represents an example of a schematic configuration of an all-solid-state type secondary battery in which a polymer electrolyte according to one aspect of the present disclosure, which will be described later, is used as a bulk electrolyte 7. Here, the bulk electrolyte refers to a solid electrolyte that is disposed as a lithium ion mobile phase between a positive electrode and a negative electrode in the secondary battery and also functions as a separator.

In the secondary battery 1 shown in Fig. 1, a positive electrode active material 3 provided on a positive electrode current collector 2 is fixed by a binder 4 in a positive electrode active material to form a positive electrode 6. The positive electrode 6 may comprise a conductive assistant 5.

A negative electrode active material 8 provided on a negative electrode current collector 9 forms a negative electrode 10. In Fig. 1, the negative electrode active material layer represents metallic lithium, indium, or the like. A layer of a bulk electrolyte 7 is provided between the positive electrode 6 and the negative electrode 10.

A secondary battery 1 shown in Fig. 2 represents an example of a schematic configuration of a secondary battery in which a polymer electrolyte is used as a binder 4 for a positive electrode active material. In the aspect of Fig. 2, a positive electrode 6 comprises a polymer electrolyte. For example, the positive electrode 6 has a positive electrode active material 3 and a binder 4 for a positive electrode active material that fixes the positive electrode active material, and the binder 4 for the positive electrode active material is the polymer electrolyte of the present disclosure. In the configuration of Fig. 2, a bulk electrolyte 7 represents an oxide-based or sulfide-based inorganic solid electrolyte. Other configurations are the same as those in Fig. 1.

A secondary battery 1 shown in Fig. 3 represents an example of a schematic configuration of a secondary battery in which a polymer electrolyte is used as a binder 4 for a positive electrode active material, a bulk electrolyte 7, and a binder 11 for a negative electrode active material. In the aspect of Fig. 3, a positive electrode, the bulk electrolyte, and a negative

electrode comprise the polymer electrolyte. That is, a positive electrode 6 has a positive electrode active material 3 and the binder 4 for the positive electrode active material that fixes the positive electrode active material, and the binder 4 for the positive electrode active material is the polymer electrolyte of the present disclosure. In addition, the bulk electrolyte 7 is the polymer electrolyte of the present disclosure. In addition, a negative electrode 10 has a negative electrode active material 8 and the binder 11 for a negative electrode active material that fixes the negative electrode active material 8, and the binder 11 for the negative electrode active material is the polymer electrolyte of the present disclosure. In the configuration shown in Fig. 3, the negative electrode active material 8 represents a carbon material such as graphite. Other configurations are the same as those in Fig. 1.

In order to more effectively exhibit effects according to the present disclosure, as shown in Figs. 1 and 3, it is preferable that the bulk electrolyte 7 is the polymer electrolyte according to one aspect of the present disclosure and infiltrates into the positive electrode active material 3 and the negative electrode active material 8 to increase the contact areas.

(Method for manufacturing solid secondary battery)

A solid secondary battery can be made by a laminated cell type, coin cell type, pressurized cell type, or other known cell formation method. Hereinafter, the laminated cell type will be described as an example.

A laminate having a positive electrode, a bulk electrolyte, and a negative electrode disposed between a positive electrode current collector and a negative electrode current collector is obtained. Electrode tabs are welded to the positive and negative electrode current collectors. The laminate in which the positive electrode current collector, the positive electrode, the bulk electrolyte, the negative electrode, and the negative electrode current collector are laminated in this order is wrapped with an aluminum laminate film and sealed with a vacuum packaging machine while being depressurized. The end portions of the electrode tabs are taken out of the laminate film, and the laminate is sealed in a state where the tabs and the aluminum laminate film are bonded together by thermo-compression bonding. After being sealed, the laminate may be pressurized with an isotropic pressurizing device or the like, if necessary. Examples of the bulk electrolyte include a solid electrolyte and a polymer electrolyte, both of which may be used for lamination. Aside from the above-described laminate, another layer of an elastic material or a resin material may be laminated in the aluminum laminate film for the purpose of strength, molding, or the like. The laminate may be a bipolar type in which a plurality of laminates is laminated together.

(Positive electrode current collector)

The positive electrode current collector holds the positive electrode active material and supplies a current to the positive electrode active material. Examples of the positive electrode current collector include metal foils and the like. Examples of metals include aluminum, stainless steel, copper, silver, gold, platinum, nickel, and palladium. One of these metals may be used singly, or two or more thereof may be used in combination.

(Positive electrode active material)

The positive electrode active material is a substance that is an active material for a battery and is used for the positive electrode. The positive electrode active material is not particularly limited, and for example, a positive electrode active material that is used in a secondary battery, such as a lithium ion secondary battery, can be used. Examples thereof include $(CF)_m$, $(C_2F)_m$, $MnO_2$, $TiS_2$, $MoS_2$, $FeS_2$, $Li_{xa}CoO_2$, $Li_{xa}NiO_2$, $Lix_aMnO_2$, $Li_{xa}Co_yNi_{1-y}O_2$, $Li_{xa}CoyM_{1-y}O_z$, $Li_{xa}Ni_{1-y}M_yO_z$, $Li_{xb}Mn_2O_4$, $Li_{xb}Mn_{2-y}M_yO_4$ (wherein M represents at least one selected from the group consisting of Na, Mg, Sc, Y, Mn, Fe, Co, Ni, Cu, Zn, Al, Cr, Pb, Sb, and B, xa = 0 to 1.2, xb = 0 to 2.0, y = 0 to 0.9, and z = 2.0 to 2.3), vanadium oxides and lithium compounds thereof, niobium oxides and lithium compounds thereof, conjugated polymers for which an organic conductive material is used, olivine-based compounds, and the like.

The xa value and the xb value in each of the above-described composition formula are values before the start of charge and discharge, and increase or decrease due to charge and discharge. One of the positive electrode active materials can be used singly, or two or more thereof can be used in combination.

(Conductive assistant)

The conductive assistant is not particularly limited as long as the conductive assistant has desired electron conductivity. Examples thereof include graphite such as natural graphite and artificial graphite, carbon blacks such as acetylene black, Ketjen black, channel black, furnace black, lamp black, and thermal black, electrically conductive fibers such as carbon fibers and metal fibers, fine metal powders such as an aluminum powder, electrically conductive whiskers such as a zinc oxide whisker and a potassium titanate whisker, electrically conductive metal oxides such as titanium oxide,

organic conductive materials such as a phenylene derivative, and the like. One of the conductive assistants can be used singly or two or more thereof can be used jointly.

(Active material binder)

The active material binders are not particularly limited as long as the active material binders are chemically and electrically stable. Examples thereof include polyvinylidene fluoride (PVDF), polytetrafluoroethylene, polyethylene, polypropylene, aramid resins, polyamide, polyimide, polyamide-imide, polyacrylonitrile, polyacrylic acid, methyl polyacrylate, ethyl polyacrylate, hexyl polyacrylate, polymethacrylic acid, methyl polymethacrylate, ethyl polymethacrylate, hexyl polymethacrylate, vinyl polyacetate, polyvinylpyrrolidone, polyethers, polyethersulfone, hexafluorpolypropylene, styrene-butadiene rubber, carboxymethyl cellulose, and the like.

The polymer electrolyte according to one aspect of the present disclosure may be used as a bulk electrolyte, may be used as an electrode active material binder, such as a binder for a positive electrode active material and a binder for a negative electrode active material, or may be used as a bulk electrolyte, a binder for a positive electrode active material, and a binder for a negative electrode active material.

That is, the secondary battery preferably meets at least one of the following (i) to (iii).

(i) The positive electrode 6 has the positive electrode active material 3 and the binder 4 for the positive electrode active material that fixes the positive electrode active material, and the binder 4 for the positive electrode active material comprises the polymer electrolyte of the present disclosure.
(ii) The bulk electrolyte 7 comprises the polymer electrolyte of the present disclosure.
(iii) The negative electrode 10 has the negative electrode active material 8 and the binder 11 for the negative electrode active material that fixes the negative electrode active material 8, and the binder 11 for the negative electrode active material comprises the polymer electrolyte of the present disclosure.

In a case where the polymer electrolyte of the present disclosure is used as a binder for a positive electrode active material or a binder for a negative electrode active material, wettability to the active material surface of the positive electrode or negative electrode is favorable, and the interfacial resistance becomes low, which is particularly preferable. One of the active material binders may be used singly or two or more thereof may be used in combination.

The positive electrode 6 can be manufactured by, for example, press-fitting a positive electrode mixture into the surface of the positive electrode current collector 2 or applying, drying, and furthermore, rolling, if necessary, a positive electrode mixture slurry to form the positive electrode 6. The positive electrode mixture can be prepared by, for example, kneading a positive electrode active material, a conductive agent, and a binder for the positive electrode active material. The positive electrode mixture slurry can be prepared by, for example, dissolving or dispersing a positive electrode active material, a conductive agent, and a binder for the positive electrode active material in a liquid medium, such as dehydrated N-methyl-2-pyrrolidone or ethylene glycol ether.

(Negative electrode current collector)

The negative electrode current collector holds the negative electrode active material and supplies a current to the negative electrode active material. Examples of the negative electrode current collector include metal foils and the like. Examples of metal include aluminum, stainless steel, copper, silver, gold, platinum, nickel, and palladium. One of these metals may be used singly, or two or more thereof may be used in combination.

(Negative electrode active material)

Examples of the negative electrode active material include metals, metal fibers, carbon materials, oxides, nitrides, silicon, silicon compounds, tin, tin compounds, various alloy materials, and the like. Among them, from the viewpoint of capacitance density, metals, oxides, carbon materials, silicon, silicon compounds, tin, tin compounds, and the like are preferable.

Examples of the metals include metallic Li or In-Li, and examples of the oxides include $Li_4Ti_5O_{12}$ (LTO: lithium titanate) and the like. Examples of the carbon materials include various natural graphites (graphite), cokes, partially graphitized carbon, carbon fibers, spherical carbon, various artificial graphites, amorphous carbon, and the like. Examples of the silicon compounds include silicon-comprising alloys, silicon-comprising inorganic compounds, silicon-comprising organic compounds, solid solutions, and the like. Examples of the tin compounds include $SnO_b$ ($0 < b < 2$), $SnO_2$, $SnSiO_3$, $Ni_2Sn_4$, $Mg_2Sn$, and the like.

**In** addition, the negative electrode material may comprise a conductive assistant. Examples of the conductive assistant include graphite such as natural graphite and artificial graphite, and carbon blacks such as acetylene black,

Ketjen black, channel black, furnace black, lamp black, and thermal black. In a case where the polymer electrolyte is used as the bulk electrolyte, graphite can also be particularly suitably used as the negative electrode active material.

Examples of the conductive assistant include carbon fibers, carbon nanotubes, conductive fibers such as metal fibers, carbon fluoride, metal powders such as aluminum, electrically conductive whiskers such as zinc oxide, electrically conductive metal oxides such as titanium oxide, organic electrically conductive materials such as phenylene dielectrics, and the like.

(Solid electrolyte)

A solid electrolyte may be used as a bulk electrolyte interposed between two electrodes (the positive electrode and the negative electrode) in a secondary battery. In addition, the solid electrolyte can also be used as an auxiliary agent that assists the conductivity of lithium ions by being comprised in an active material layer of at least one electrode selected from the group consisting of the positive electrode and the negative electrode.

The polymer electrolyte of the present disclosure can also be suitably used in any case of a bulk electrolyte and an auxiliary agent. This makes it possible to enlarge the contact interfaces between the bulk electrolyte and the positive and negative electrode active materials, and furthermore, the polymer electrolyte is flexible enough to follow the expansion and contraction of the positive and negative electrode active materials and is thus capable of improving the characteristics of the secondary battery.

Solid electrolytes other than the polymer electrolyte according to one aspect of the present disclosure may also be used as bulk electrolytes and auxiliary agents. Examples of the solid electrolytes other than the polymer electrolyte include oxide-based solid electrolytes, sulfide-based solid electrolytes, complex hydride-based solid electrolytes, and the like.

Examples of the oxide-based solid electrolytes include NASICON-type compounds such as $Li_{1.5}Al_{0.5}Ge_{1.5}(PO_4)_3$ or $Li_{1.3}Al_{0.3}Ti_{1.7}(PO_4)_3$ and garnet-type compounds such as $Li_{6.25}La_3Zr_2Al_{0.25}O_{12}$. In addition, examples of the oxide-based solid electrolytes include perovskite-type compounds such as $Li_{0.33}Li_{0.55}TiO_3$. In addition, examples of the oxide-based solid electrolytes include silicon-type compounds such as $Li_{14}Zn(GeO_4)_4$ and acid compounds such as $Li_3PO_4$, $Li_4SiO_4$, or $Li_3BO_3$. Specific examples of the sulfide-based solid electrolytes include $Li_2S$-$SiS_2$, LiI-$Li_2S$-$SiS_2$, LiI-$Li_2S$-$P_2S_5$, LiI-$Li_2S$-$P_2O_5$, LiI-$Li_3PO_4$-$P_2S_5$, $Li_2S$-$P_2S_5$, and the like.

In addition, the solid electrolyte may be crystalline or amorphous and may be glass-ceramic. Expression such as $Li_2S$-$P_2S_5$ and the like means sulfide-based solid electrolytes formed using a raw material comprising $Li_2S$ and $P_2S_5$.

The polymer electrolyte of the present disclosure can be used as a bulk electrolyte or an electrode active material binder, such as a binder for a positive electrode active material and a binder for a negative electrode active material. Hereinafter, the configuration of the polymer electrolyte according to one embodiment of the present disclosure will be described in detail.

The polymer electrolyte of the present disclosure is preferably a solid electrolyte, for example, a dry polymer electrolyte, a gel electrolyte, or the like. A dry polymer electrolyte is more preferable. The polymer electrolyte preferably does not substantially comprise liquid components, such as a liquid electrolyte. The content of the liquid component in the dry polymer electrolyte is preferably 1.0% by mass or less, particularly, 0.5% by mass or less, and furthermore, 0.1% by mass or less.

(Polymer electrolyte)

The polymer electrolyte according to one embodiment of the present disclosure comprises a polyurethane, a lithium salt, and an anion. The polyurethane has a three-dimensional cross-linked structure.

The polymer electrolyte comprises the polyurethane having a three-dimensional cross-linked structure and is thereby capable of suppressing a decrease in strength under high temperature environments.

Incidentally, the present inventors assume the reason for the polymer electrolyte exhibiting an unexpected effect of having a high ion conductivity despite the polyurethane having a three-dimensional cross-linked structure comprised to suppress a decrease in strength under high temperature environments as described below.

The lithium salt, which is a support electrolyte, is highly polar. On the other hand, the polyurethane that is obtained by reacting an isocyanate and a polyol usually rarely has a portion that separates into a cation and an anion. Therefore, generally, the polyurethane is less polar than, for example, liquid electrolytes, such as ionic liquids. Therefore, usually when the polymer electrolyte comprising the polyurethane comprises a lithium salt, due to the high polarity of the lithium salt, the lithium salts are likely to aggregate together and be precipitated. As a result, the content of the lithium salt that can be dissolved by the polymer electrolyte is likely to be small.

Furthermore, when a polyurethane having a three-dimensional cross-linked structure is used to suppress a decrease in strength under high temperature environments, migration of lithium ions is likely to be inhibited by steric hindrance arising from the cross-linked structure. As a result, the ion conductivity of the polymer electrolyte comprising the

polyurethane having a three-dimensional cross-linked structure and the lithium salt is likely to be low.

The polymer electrolyte according to one aspect of the present disclosure comprises the polyurethane, the lithium salt, and an anion. The polyurethane has a three-dimensional cross-linked structure. Furthermore, the polyurethane has a cationic structure in the molecule. Therefore, the polymer electrolyte has a highly polar structure. When the polymer electrolyte has a highly polar structure, the difference in polarity between the polyurethane and the lithium salt, which is a support electrolyte, is reduced, and the lithium salt is less likely to be precipitated. As a result, it is possible to increase the content of the lithium salt in the polymer electrolyte.

On the other hand, the anion that forms a pair with a cationic structure in the molecule of the polyurethane also interacts with a lithium cation and thus prevents ion migration. Therefore, it was believed that the ion conductivity was decreased. However, an unexpected effect of ion conductivity improvement was shown. This is believed to be because the cationic structure is present in the molecule of the polyurethane and thereby interacts with an anion of the lithium salt and improves the separation rate of the lithium salt. It is believed that this separation rate improvement effect is stronger than the effect of the anion that is in the polyurethane that suppresses lithium cation migration and whereby the ion conductivity improved.

(Polyurethane)

The polyurethane has a three-dimensional cross-linked structure, and the polyurethane has a cationic structure in the molecule.

A method for obtaining such a polyurethane is not particularly limited, and the polyurethane can be obtained by reacting an ionic compound having a functional group capable of reacting with an isocyanate group (such as a hydroxyl group), an isocyanate compound such as a polyisocyanate, and a polyol. In addition, the polyurethane can also be obtained by reacting a urethane prepolymer, which will be described below, a polyol, and an ionic compound. At this time, at least one selected from the group consisting of the polyol and the isocyanate compound has three or more functional groups. That is, the polyol has at least three hydroxyl groups or the isocyanate compound has at least three isocyanate groups. Specifically, for example, as a raw material mixture of the polyurethane, a raw material mixture comprising the following i), ii), or iii) is preferably used:

i) a combination of a polyol having at least three hydroxyl groups and an isocyanate compound having at least two isocyanate groups;
ii) a combination of a polyol having at least two hydroxyl groups and an isocyanate compound having at least three isocyanate groups;
iii) a combination of a polyol having at least three hydroxyl groups and an isocyanate compound having at least three isocyanate groups.

(Polyol)

The polyol is not particularly limited, but is preferably a polyol having at least two hydroxyl groups. Examples thereof include at least one selected from the group consisting of a polyether polyol, a polyester polyol, a polycaprolactone polyol, a polycarbonate polyol, a polyolefin polyol, and an acrylic polyol. Among these, a polyether polyol is preferable from the viewpoint of conductivity.

In addition, in a case where an isocyanate compound having two isocyanate groups is used as an isocyanate compound, which will be described below, the polyol is preferably a polyol having at least three hydroxyl groups.

As the polyether polyol, it is possible to use at least one selected from the group consisting of the diol and triol types of polyethylene glycol, the diol and triol types of polypropylene glycol, and the diol and triol types of poly 1,4-butanediol, poly 1,5-pentanediol, polyneopentyl glycol, poly 3-methyl-1,4-butanediol, poly 3-methyl-1,5-pentanediol, poly 1,6-hexanediol, poly 1,8-octandiol, poly 1,9-nonanediol, poly 1,4-butanediol-3-methyl-1,4-butanediol copolymers, and polyethylene glycol-propylene glycol copolymers.

In a case where a polyethylene glycol-propylene glycol copolymer is used as the polyol, the molar ratio between the polyethylene glycol structure and the polypropylene glycol structure is preferably 90: 10 to 50:50, and particularly preferably 80:20 to 90: 10.

In a case where the molar ratio between the ethylene glycol structure and the propylene glycol structure is within this range, it is possible to maintain the lithium ion transportability by polyethylene glycol at a high level, and it becomes easy to suppress migration hindrance of lithium ions due to crystallization of the polymer.

**In** addition, the number average molecular weight of the polyol is preferably 1000 to 10000 and particularly preferably 3000 to 5000. When the number average molecular weight is less than 1000, mechanical strength is excellent, but the crosslinking conversion distance becomes short, and the cross-linking density thereby becomes high, the mobility of ions is thus likely to decrease. **In** addition, when the number average molecular weight is 10000 or more, the number of

crosslinking points is small, and the crosslinking density becomes too low, and the mechanical strength is thus likely to decrease.

When the number average molecular weight is within a range of 1000 to 10000, it is easy to secure mechanical strength while maintaining ion mobility. In addition, when the number average molecular weight is within a range of 3000 to 5000, crystallization at a low temperature due to the interaction between the polyols is less likely to occur, and ion mobility at a low temperature improves, which is more preferable.

The degree of the crosslinking density of the polyurethane developed can be confirmed from the volume expansion rate of the polymer electrolyte by a methyl ethyl ketone immersion method. The volume expansion rate of the polymer electrolyte using methyl ethyl ketone (MEK) is preferably 30.0 to 100.0%. When the volume expansion rate of the polymer electrolyte is within the above-described range, it is possible to satisfy the ion conductivity of the polymer electrolyte and the mechanical strength under high temperature environments at a high level, which is preferable. For example, when the volume expansion rate is 100.0% or less, a decrease in mechanical strength under high temperature environments due to a low cross-linking density is less likely to be caused. In addition, when the volume expansion rate is 30.0% or more, the ion migration inhibition effect due to a high cross-linking density is less likely to be caused.

The volume expansion rate of the polymer electrolyte is more preferably 30.0 to 80.0% and still more preferably 40.0 to 80.0%.

The volume expansion rate represents the ratio between the volumes of the polyurethane before and after being immersed in a specific solvent and swollen by the solvent to be saturated. The volume expansion rate is calculated by the following equation, and the volume of a test specimen is calculated from the weight in air and the weight in water. A specific measurement method will be described below.

Volume expansion rate (%) = (volume of polyurethane saturated by expansion when ×immersed in solvent)/(volume before immersed in solvent) × 100

(Isocyanate compound)

The isocyanate compound is not particularly limited, but is preferably an isocyanate compound having at least two isocyanate groups. For example, aliphatic polyisocyanates such as ethylene diisocyanate and 1,6-hexamethylenediisocyanate (HDI); alicyclic polyisocyanates such as isophorone diisocyanate (IPDI), cyclohexane 1,3-diisocyanate, and cyclohexane 1,4-diisocyanate; aromatic isocyanates such as 2,4-tolylene diisocyanate (TDI), 1,4-phenylene diisocyanate, 4,4'-diphenylmethane diisocyanate (MDI), polymeric diphenylmethane diisocyanate (polymeric MDI), xylylene diisocyanate, and naphthalene diisocyanate, copolymers, isocyanurate bodies, TMP adduct bodies, biuret bodies, and block bodies thereof can be used. These isocyanate compounds can be used singly, or two or more thereof can be used in combination.

Among these, at least one selected from the group consisting of 1,4-phenylenediisocyanate, 4,4-diphenylmethane diisocyanate, and polymeric MDI is preferably comprised, and at least one selected from the group consisting of polymeric MDI, and 1,4-phenylenediisocyanate is more preferably comprised.

In a case where a polyol having two hydroxyl groups (that is, a diol type) is used as the above-described polyol, the isocyanate compound is preferably an isocyanate compound having at least three isocyanate groups such as polymeric MDI.

Among what has been described, polymeric MDI is preferable. Here, polymeric MDI is a mixture of a monomeric MDI and a high-molecular-weight polyisocyanate and is represented by the following formula (A). In the formula (A), n is preferably from 0 to 4.

As the polymeric MDI, a commercially available product may be used, and examples thereof include MILLIONATE MR series (manufactured by Tosoh Corporation) such as MILLIONATE MR200 (trade name).

[C1]

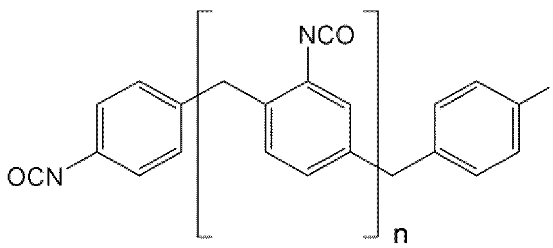

(A)

**In** addition, a urethane prepolymer obtained by reacting a polyol such as the above-described polyether polyol

and the above-described isocyanate compound may be used as the isocyanate compound. The urethane prepolymer is a polymer obtained by reacting a polyol with a polyisocyanate. The urethane prepolymer has at least one isocyanate group and has a polyether structure.

In a case where the urethane prepolymer is used as the isocyanate compound, the content of the isocyanate compound that is used to synthesize the urethane prepolymer is preferably 1.0 to 200.0 parts by mass, more preferably 5.0 to 100.0 parts by mass, still more preferably 10.0 to 50.0 parts by mass, particularly preferably 10.0 to 40.0 parts by mass, and especially preferably 10.0 to 30.0 parts by mass relative to 100 parts by mass of the polyol.

In addition, in a case where the urethane prepolymer is used as the isocyanate compound, the isocyanate content in the urethane prepolymer is preferably 1.0 to 5.0% by mass and more preferably 1.5 to 3.5% by mass. When the isocyanate content is within the above-described range, it becomes easy to control the crosslinking density.

The content of the isocyanate compound is not particularly limited, but is preferably 50.0 to 480.0 parts by mass, more preferably 60.0 to 400.0 parts by mass, still more preferably 70.0 to 300.0 parts by mass, particularly preferably 70.0 to 200.0 parts by mass, and especially preferably 70.0 to 150.0 parts by mass relative to 100 parts by mass of the polyol.

(Cationic structure)

The polyurethane has a cationic structure in the molecule. The cation structure and the anion that is in the polymer electrolyte are preferably a residue obtained by reacting an ionic compound comprising an anion and a cation structure having a reactive functional group capable of reacting with an isocyanate group and an isocyanate group.

The ionic compound comprising an anion and a cationic structure having a reactive functional group capable of reacting with an isocyanate group comprises an anion and a cationic structure having at least one functional group capable of reacting with an isocyanate group (for example, a hydroxyl group). Examples of the functional group capable of reacting with an isocyanate group include hydroxyl groups and amino groups, and hydroxyl groups are preferable.

The content of the ionic compound is preferably 0.5 to 5.0 parts by mass, more preferably 0.7 to 3.0 parts by mass, and still more preferably 1.0 to 2.0 parts by mass relative to a total of 100 parts by mass of the polyol and the isocyanate. When the content of the ionic compound is within this range, it is possible to satisfy both improvement in the compatibility of the lithium salt, which is a support electrolyte, and the separation rate improvement effect at a high level.

Hereinafter, the cationic structure of the ionic compound and the anion will be described. The combination of the cationic structure and the anion is not particularly limited.

The cationic structure preferably includes at least one selected from the group consisting of a cationic nitrogen-comprising heterocyclic structure and an ammonium cation having a linear or branched structure. This makes it possible to increase the polarity of the polyurethane.

The cationic nitrogen-comprising heterocyclic structure is not particularly limited and may be a four to eight-membered ring.

Examples of the cationic nitrogen-comprising heterocyclic structure include cationic nitrogen-comprising aromatic heterocyclic structures, such as an imidazolium cation, a pyridinium cation, a pyrazinium cation, a pyrimidinium cation, an azepinium cation, a quinolinium cation, an isoquinolinium cation, an indolinium cation, a quinoxalinium cation, a triazolium cation, a triazine cation, and a thiazolinium cation; and cationic nitrogen-comprising aliphatic heterocyclic structures, such as a pyrrolidinium cation, a pyrrolinium cation, an imidazolinium cation, an imidazolidinium cation, a piperazinium cation, an azepanium cation, a diazepanium cations, such as a 1,3-diazepanium cation or a 1,4-diazepanium cation, an azocanium cation, an oxazolinium cation, and a morpholinium cation. Among these, the cationic nitrogen-comprising aromatic heterocyclic structure is preferably at least one selected from the group consisting of an imidazolium cation, a pyridinium cation, and a pyrazinium cation and more preferably an imidazolium cation. The cationic nitrogen-comprising aliphatic heterocyclic structure is preferably at least one selected from the group consisting of a pyrrolidinium cation and a piperazinium cation and more preferably a pyrrolidinium cation.

Examples of the ammonium cation having a linear or branched structure include a primary ammonium cation, a secondary ammonium cation, a tertiary ammonium cation, and a quaternary ammonium cation, and among these, a quaternary ammonium cation is preferable.

The hydrocarbon group that the ammonium cation has is not particularly limited, and the ammonium cation may have, for example, a hydrocarbon group having 1 to 8 carbon atoms (preferably 1 to 4 carbon atoms, more preferably 1 or 2 carbon atoms, and still more preferably 1 carbon atom). In addition, the ammonium cation having a linear or branched structure may be a structure represented by the following formula (4).

The cationic structure may have an arbitrary substituent, such as a hydrocarbon group. For example, the cation structure preferably comprises at least one structure selected from the group consisting of structures represented by the following formulas (1) to (6). Hereinafter, each of the structures represented by the formulas (1) to (6) will be described.

Hereinafter, the structure represented by the formula (1) will be described.

[C2]

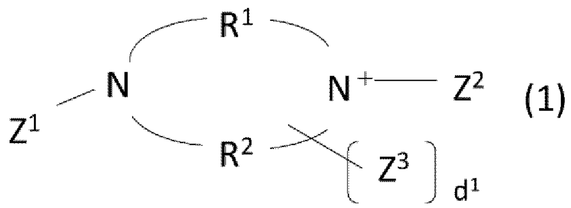

In the formula (1), $d^1$ represents an integer of 0 to 3 (preferably 0 or 1). $R^1$ and $R^2$ represent hydrocarbon groups that form a five-membered nitrogen-comprising aromatic heterocyclic structure with a nitrogen atom. $Z^1$ and $Z^2$ each independently represent a structure represented by the formula (X), a hydrogen atom, a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. In addition, $Z^3$ represents the structure represented by the following formula (X), a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. Furthermore, at least one selected from the group consisting of $Z^1$, $Z^2$ and at least one $Z^3$, in a case where $d^1$ is 1 or more, is the structure represented by following formula (X).

As the hydrocarbon group having 1 to 4 carbon atoms, an alkyl group having 1 to 4 carbon atoms is preferable, an alkyl group having 1 or 2 carbon atoms is more preferable, and an alkyl group having 1 carbon atom is still more preferable.

The hydrocarbon group having 1 to 4 carbon atoms that has a hydroxyl group is preferably a hydroxyalkyl group having 1 to 4 carbon atoms, more preferably a hydroxyalkyl group having 1 or 2 carbon atoms, and still more preferably a hydroxyalkyl group having 1 carbon atom. In addition, the hydrocarbon group may have two or more hydroxyl groups.

The structure represented by the formula (1) represents a cation of a five-membered nitrogen-c comprising ontaining aromatic heterocyclic structure having at least one structure represented by the following formula (X) and two nitrogen atoms. **In** addition, the nitrogen-comprising aromatic heterocyclic structure in the formula (1) is preferably, for example, an imidazolium cation.

A method for making the structure represented by the formula (1) be comprised in the molecule of the polyurethane is not particularly limited, but at least one structure represented by the formula (1) is comprised in the molecule of the polyurethane by, for example, reacting an ionic compound having a structure corresponding to the cation of the five-membered nitrogen-comprising aromatic heterocyclic structure represented by the formula (1) and an isocyanate compound.

As the five-membered nitrogen-comprising aromatic heterocyclic structure in the formula (1), the cationic nitrogen-comprising aromatic heterocyclic structure described in the above-described section of the cationic structure can be used, and an imidazolium cation is particularly preferable.

Examples of the ionic compound having the structure corresponding to the cation of the five-membered nitrogen-comprising aromatic heterocyclic structure in the formula (1) include ionic compounds in which at least one selected from the group consisting of $Z^1$, $Z^2$ and at least one $Z^3$, in a case where $d^1$ is 1 or more, in the formula (1) is a linear or branched divalent hydrocarbon having a hydroxyl group. The structure represented by the formula (1) can be obtained by reacting such an ionic compound and an isocyanate compound. As examples of such ionic compounds, ionic compounds having an imidazolium cation will be shown below.

1-Methyl-3-hydroxymethyl imidazolium cation, 1-methyl-3-(2-hydroxyethyl) imidazolium cation, 1-methyl-3-(3-hydroxypropyl) imidazolium cation, 1-methyl-3-(4-hydroxybutyl) imidazolium cation, 1-ethyl-3-(2-hydroxyethyl) imidazolium cation, 1-n-butyl-3-(2-hydroxyethyl) imidazolium cation, 1,3-dimethyl-2-(2-hydroxyethyl) imidazolium cation, 1,3-dimethyl-2-(4-hydroxybutyl) imidazolium cation, 1,3-dimethyl-4-(2-hydroxyethyl) imidazolium cation;

1,3-bishydroxymethyl imidazolium cation, 1,3-bis(2-hydroxyethyl) imidazolium cation, 2-methyl-1,3-bishydroxymethyl imidazolium cation, 2-methyl-1,3-(2-hydroxyethyl) imidazolium cation, 4-methyl-1,3-bis(2-hydroxyethyl) imidazolium cation, 2-ethyl-1,3 bis(2-hydroxyethyl) imidazolium cation, 4-ethyl-1,3-bis(2-hydroxyethyl) imidazolium cation, 2-n-butyl 1,3-bis(2-hydroxyethyl) imidazolium cation, 4-n-butyl-1,3-bis(2-hydroxyethyl) imidazolium cation, 1,3-bis(3-hydroxypropyl) imidazolium cation, 1,3-bis(4-hydroxybutyl) imidazolium cation, 1-methyl-2,3-bis(2-hydroxyethyl) imidazolium cation, 1-methyl-3,4-bis(2-hydroxyethyl) imidazolium cation, 1-methyl-3,5-bis(2-hydroxyethyl) imidazolium cation;

1,2,3-trishydroxymethyl imidazolium cation, 1,2,3-tris(2-hydroxyethyl) imidazolium cation, 1,2,3-tris(3-hydroxypropyl) imidazolium cation, 1,2,3-tris(4-hydroxybutyl) imidazolium cation, 1,3,4-trishydroxymethyl imidazolium cation, 1,3,4-tris(2-hydroxyethyl) imidazolium cation, 1,3,4-tris(3-hydroxypropyl) imidazolium cation, 1,3,4-tris(4-hydroxybutyl) imidazolium cation;
and derivatives thereof.

Hereinafter, the structure represented by the formula (2) will be described.

[C3]

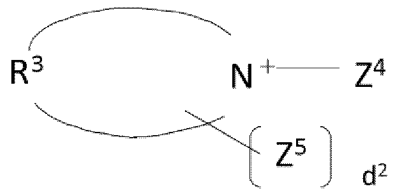

(2)

In the formula (2), $d^2$ represents an integer of 0 to 5 (preferably 0 to 3, and more preferably 0 or 1). $R^3$ represents a hydrocarbon group that forms a nitrogen-comprising aromatic heterocyclic structure with a nitrogen atom. $Z^4$ represents the structure represented by the following formula (X), a hydrogen atom, a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. In addition, $Z^5$ represents the structure represented by the formula (X), a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. Furthermore, at least one selected from the group consisting of $Z^4$ and at least one $Z^5$, in a case where $d^2$ is 1 or more, is the structure represented by the following formula (X).
As the hydrocarbon group having 1 to 4 carbon atoms, an alkyl group having 1 to 4 carbon atoms is preferable, an alkyl group having 1 or 2 carbon atoms is more preferable, and an alkyl group having 1 carbon atom is still more preferable.
The hydrocarbon group having 1 to 4 carbon atoms that has a hydroxyl group is preferably a hydroxyalkyl group having 1 to 4 carbon atoms, more preferably a hydroxyalkyl group having 1 or 2 carbon atoms, and still more preferably a hydroxyalkyl group having 1 carbon atom. In addition, the hydrocarbon group may have two or more hydroxyl groups.
The structure represented by the formula (2) represents a cation of a nitrogen-comprising aromatic heterocyclic structure having at least one structure represented by the following formula (X). In addition, the nitrogen-comprising aromatic heterocyclic structure in the formula (2) may be a five-membered ring to an eight-membered ring and is preferably a five-membered ring or a six-membered ring. The nitrogen-comprising aromatic heterocyclic structure in the formula (2) is preferably, for example, a pyridinium cation.
A method for making the structure represented by the formula (2) be comprised in the molecule of the polyurethane is not particularly limited, but at least one structure represented by the formula (2) is comprised in the molecule of the polyurethane by, for example, reacting an ionic compound having a structure corresponding to the cation of the nitrogen-comprising aromatic heterocyclic structure represented by the formula (2) and an isocyanate compound.
As the nitrogen-comprising aromatic heterocyclic structure in the formula (2), the cationic nitrogen-comprising aromatic heterocyclic structure described in the above-described section of the cationic structure can be used, and a pyridinium cation is particularly preferable.
Examples of the ionic compound having the structure corresponding to the cation of the nitrogen-comprising aromatic heterocyclic structure in the formula (2) include ionic compounds in which at least one selected from the group consisting of $Z^4$ and at least one $Z^5$, in a case where $d^2$ is 1 or more, in the formula (2) is a linear or branched divalent hydrocarbon having a hydroxyl group. The structure represented by the formula (2) can be obtained by reacting such an ionic compound and an isocyanate compound. As examples of such ionic compounds, ionic compounds having a pyridinium cation will be shown below.

1-hydroxymethylpyridinium cation, 1-(2-hydroxyethyl)pyridinium cation, 1-(3-hydroxypropyl)pyridinium cation, 1-(4-hydroxybutyl)pyridinium cation, 2-methyl-1-(2-hydroxyethyl)pyridinium cation, 3-methyl-1-(2-hydroxyethyl)pyridinium cation, 4-methyl-1-(2-hydroxyethyl)pyridinium cation, 3-ethyl-1-(2-hydroxyethyl)pyridinium cation, 3-n-butyl-1-(2-hydroxyethyl)pyridinium cation, 1-methyl-2-hydroxymethylpyridinium cation, 1-methyl-3-hydroxymethylpyridinium cation, 1-methyl-4-hydroxymethylpyridinium cation, 1-methyl-2-(2-hydroxyethyl)pyridinium cation, 1-methyl-3-(2-hydroxyethyl)pyridinium cation, 1-methyl-4-(2-hydroxyethyl)pyridinium cation, 1-ethyl-3-(2-hydroxyethyl)pyridinium cation, 1-n-butyl-3-(2-hydroxyethyl)pyridinium cation, 2-methyl-4-n-butyl-1-(2-hydroxyethyl)pyridinium cation;
1,2-bishydroxymethylpyridinium cation, 1,3-bishydroxymethylpyridinium cation, 1,4-bishydroxymethylpyridinium

cation, 1,2-bis(2-hydroxyethyl)pyridinium cation, 1,3-bis(2-hydroxyethyl)pyridinium cation, 1,4-bis(2-hydroxyethyl) pyridinium cation, 1,2-bis(3-hydroxypropyl)pyridinium cation, 1,2-bis(3-hydroxypropyl)pyridinium cation, 1,3-bis(3-hydroxypropyl)pyridinium cation, 1,4-bis(3-hydroxypropyl)pyridinium cation, 1,2-bis(4-hydroxybutyl)pyridinium cation, 1,3-bis(4-hydroxybutyl)pyridinium cation, 1,4-bis(4-hydroxybutyl)pyridinium cation, 2-methyl-1,3-bis(2-hydroxyethyl)pyridinium cation, 2-ethyl-1,3-bis(2-hydroxyethyl)pyridinium cation, 5-methyl-1,3-bis(2-hydroxyethyl)pyridinium cation, 5-ethyl-1,3-bis(2-hydroxyethyl)pyridinium cation;

1,2,4-trishydroxymethylpyridinium cation, 1,2,4-tris(2-hydroxyethyl)pyridinium cation, 1,2,4-tris(3-hydroxypropyl) pyridinium cation, 1,2,4-tris(4-hydroxybutyl)pyridinium cation, 1,3,5-trishydroxymethylpyridinium cation, 1,3,5-tris(2-hydroxyethyl)pyridinium cation, 1,3,5-tris(3-hydroxypropyl)pyridinium cation, 1,3,5-tris(4-hydroxybutyl)pyridinium cation;

and derivatives thereof.

The structure represented by the formula (3) will be described below.

[C4]

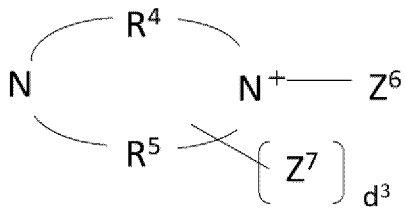

(3)

In the formula (3), $d^3$ represents an integer of 0 to 4 (preferably 0 to 2). $R^4$ and $R^5$ represent hydrocarbon groups that form a six-membered nitrogen-comprising aromatic heterocyclic structure with a nitrogen atom.

$Z^6$ represents the structure represented by the formula (X), a hydrogen atom, a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. In addition, $Z^7$ represents the structure represented by the following formula (X), a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. Furthermore, at least one selected from the group consisting of $Z^6$ and at least one $Z^7$, in a case where $d^3$ is 1 or more, is the structure represented by the following formula (X).

As the hydrocarbon group having 1 to 4 carbon atoms, an alkyl group having 1 to 4 carbon atoms is preferable, an alkyl group having 1 or 2 carbon atoms is more preferable, and an alkyl group having 1 carbon atom is still more preferable.

The hydrocarbon group having 1 to 4 carbon atoms that has a hydroxyl group is preferably a hydroxyalkyl group having 1 to 4 carbon atoms, more preferably a hydroxyalkyl group having 1 or 2 carbon atoms, and more preferably a hydroxyalkyl group having 1 carbon atom. In addition, the hydrocarbon group may have two or more hydroxyl groups.

The structure represented by the formula (3) represents a cation of a six-membered nitrogen-comprising aromatic heterocyclic structure having at least one structure represented by the following formula (X) and two nitrogen atoms. The nitrogen-comprising aromatic heterocyclic structure in the formula (3) is preferably, for example, a pyrazinium cation.

A method for making the structure represented by the formula (3) be comprised in the molecule of the polyurethane is not particularly limited, but at least one structure represented by the formula (3) is comprised in the molecule of the polyurethane by, for example, reacting an ionic compound having a structure corresponding to the cation of the six-membered nitrogen-comprising aromatic heterocyclic structure represented by the formula (3) and an isocyanate compound.

As the six-membered nitrogen-comprising aromatic heterocyclic structure in the formula (3), the cationic nitrogen-comprising aromatic heterocyclic structure described in the above-described section of the cationic structure can be used, and a pyrimidinium cation and a pyrazinium cation are particularly preferable.

Examples of the ionic compound having the structure corresponding to the cation of the six-membered nitrogen-comprising aromatic heterocyclic structure in the formula (3) include ionic compounds in which at least one selected from the group consisting of $Z^6$ and at least one $Z^7$, in a case where $d^3$ is 1 or more, in the formula (3)is a linear or branched divalent hydrocarbon having a hydroxyl group. The structure represented by the formula (3) can be obtained by reacting such an ionic compound and an isocyanate compound. As examples of such ionic compounds, ionic compounds comprising a pyrimidinium cation will be shown below.

1,4-Bis(2-hydroxyethyl)pyrimidinium cation, 1,5-bis(3-hydroxybutyl)pyrimidinium cation, 1-(4-hydroxybutyl)-4-(2-hydroxyethyl)pyrimidinium cation, 1,4-bis(2-hydroxyethyl)-2-methylpyrimidinium cation; and derivatives thereof.

Hereinafter, the structure represented by the formula (4) will be described.

[C5]

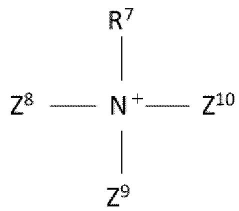

(4)

**In** the formula (4), $R^7$ represents a hydrogen atom or a hydrocarbon group having 1 to 4 carbon atoms (preferably 1 or 2 carbon atoms), $Z^8$ to $Z^{10}$ each independently represent the structure represented by the formula (X), a hydrogen atom, a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group, and at least one selected from the group consisting of $Z^8$ to $Z^{10}$ is the structure represented by the formula (X).

As the hydrocarbon group having 1 to 4 carbon atoms, an alkyl group having 1 to 4 carbon atoms is preferable, an alkyl group having 1 or 2 carbon atoms is more preferable, and an alkyl group having 1 carbon atom is still more preferable.

The hydrocarbon group having 1 to 4 carbon atoms that has a hydroxyl group is preferably a hydroxyalkyl group having 1 to 4 carbon atoms, more preferably a hydroxyalkyl group having 1 or 2 carbon atoms, and still more preferably a hydroxyalkyl group having 1 carbon atom. In addition, the hydrocarbon group may have two or more hydroxyl groups.

The structure represented by the formula (4) represents an ammonium cation having at least one structure represented by the following formula (X).

A method for making the structure represented by the formula (4) be comprised in the molecule of the polyurethane is not particularly limited, but at least one structure represented by the formula (4) is comprised in the molecule of the polyurethane by, for example, reacting an ionic compound having a structure corresponding to the ammonium cation represented by the formula (4) and an isocyanate compound.

As the ammonium cation in the formula (4), an ammonium cation having the linear or branched structure described in the above-described section of the cationic structure can be used, and a quaternary ammonium cation is particularly preferable.

Examples of the ionic compound having the structure corresponding to the ammonium cation in the formula (4) include ionic compounds in which at least one selected from the group consisting of $Z^8$ to $Z^{10}$ in the formula (4) is a linear or branched divalent hydrocarbon having a hydroxyl group. The structure represented by the formula (4) can be obtained by reacting such an ionic compound and an isocyanate compound. As examples of such ionic compounds, ionic compounds having a quaternary ammonium cation will be shown below.

2-Hydroxyethyl trimethylammonium cation, 2-hydroxyethyl triethylammonium cation, 4-hydroxybutyl trimethylammonium cation, 4-hydroxybutyl-tri-n-butylammonium cation;
bis(hydroxymethyl)dimethylammonium cation, bis(2-hydroxyethyl)dimethylammonium cation, bis(3-hydroxypropyl) dimethylammonium cation, bis(4-hydroxybutyl)dimethylammonium cation;
tris(hydroxymethyl)methylammonium cation, tris(2-hydroxyethyl)methylammonium cation, tris(3-hydroxypropyl) methylammonium cation, tris(4-hydroxybutyl)methylammonium cation;
and derivatives thereof.

Hereinafter, the structure represented by the formula (5) will be described.

[C6]

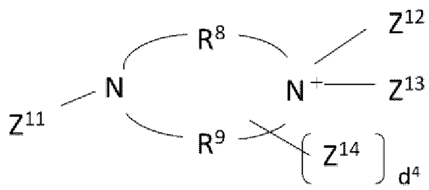

(5)

In the formula (5), $d^4$ represents an integer of 0 to 4 (preferably 0 to 3 and more preferably 0 to 2). $R^8$ and $R^9$ represent hydrocarbon groups that form a nitrogen-comprising aliphatic heterocyclic structure with a nitrogen atom. $Z^{11}$ to $Z^{13}$ each independently represent the structure represented by the formula (X), a hydrogen atom, a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. In addition, $Z^{14}$ represents the structure represented by the following formula (X), a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. Furthermore, at least one selected from the group consisting of $Z^{11}$ to $Z^{13}$ and at least one $Z^{14}$, in a case where $d^4$ is 1 or more, is the structure represented by following formula (X).

As the hydrocarbon group having 1 to 4 carbon atoms, an alkyl group having 1 to 4 carbon atoms is preferable, an alkyl group having 1 or 2 carbon atoms is more preferable, and an alkyl group having 1 carbon atom is still more preferable.

The hydrocarbon group having 1 to 4 carbon atoms that has a hydroxyl group is preferably a hydroxyalkyl group having 1 to 4 carbon atoms, more preferably a hydroxyalkyl group having 1 or 2 carbon atoms, and still more preferably a hydroxyalkyl group having 1 carbon atom. In addition, the hydrocarbon group may have two or more hydroxyl groups.

The structure represented by the formula (5) represents a cation of a nitrogen-comprising aliphatic heterocyclic structure having at least one structure represented by the following formula (X) and two nitrogen atoms. In addition, the nitrogen-comprising aliphatic heterocyclic structure in the formula (5) may be a five-membered ring to an eight-membered ring and is preferably a five-membered ring or a six-membered ring. The nitrogen-comprising aliphatic heterocyclic structure in the formula (5) is preferably, for example, a piperazinium cation.

A method for making the structure represented by the formula (5) be comprised in the molecule of the polyurethane is not particularly limited, but at least one structure represented by the formula (5) is comprised in the molecule of the polyurethane by, for example, reacting an ionic compound having a structure corresponding to the cation of the nitrogen-comprising aliphatic heterocyclic structure represented by the formula (5) and an isocyanate compound.

As the nitrogen-comprising aliphatic heterocyclic structure in the formula (5), the cationic nitrogen-comprising aliphatic heterocyclic structure described in the above-described section of the cationic structure can be used, and a piperazinium cation is particularly preferable.

Examples of the ionic compound having the structure corresponding to the cation of the nitrogen-comprising aliphatic heterocyclic structure in the formula (5) include ionic compounds in which at least one selected from the group consisting of $Z^{11}$ to $Z^{13}$ and at least one $Z^{14}$, in a case where $d^4$ is 1 or more, in the formula (5) is a linear or branched divalent hydrocarbon having a hydroxyl group. The structure represented by the formula (5) can be obtained by reacting such an ionic compound and an isocyanate compound. As examples of such ionic compounds, ionic compounds having a piperazinium cation will be shown below.

1,1-Bis(2-hydroxyethyl)piperazinium cation, 1,1,4-tris(2-hydroxyethyl)piperazinium cation, 1,4-bis(3-hydroxypropyl)-1-ethylpiperazinium cation, 1,4-bis(2-hydroxyethyl)-1,3-diethylpiperazinium cation; and derivatives thereof.

Hereinafter, the structure represented by the formula (6) will be described.

[C7]

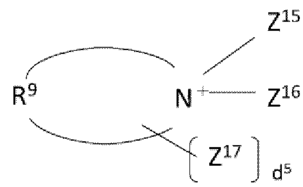

(6)

In the formula (6), $d^5$ represents an integer of 0 to 4 (preferably 0 to 3 and more preferably 0 or 1). $R^9$ represents a hydrocarbon group that forms a nitrogen-comprising aliphatic heterocyclic structure with a nitrogen atom. $Z^{15}$ and $Z^{16}$ each independently represent the structure represented by the formula (X), a hydrogen atom, a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. $Z^{17}$ represents the structure represented by the following formula (X), a hydroxyl group, a hydrocarbon group having 1 to 4 carbon atoms (preferably 1 or 2 carbon atoms and more preferably 1 carbon atom), or a hydrocarbon group having 1 to 4 carbon atoms (preferably 1 or 2 carbon atoms and more preferably 1 carbon atom) that has a hydroxyl group. Furthermore, at least one selected from the group consisting of $Z^{15}$, $Z^{16}$ and at least one $Z^{17}$, in a case where $d^5$ is 1 or more, is the structure represented by following formula (X).

As the hydrocarbon group having 1 to 4 carbon atoms, an alkyl group having 1 to 4 carbon atoms is preferable, an alkyl group having 1 or 2 carbon atoms is more preferable, and an alkyl group having 1 carbon atom is still more preferable.

The hydrocarbon group having 1 to 4 carbon atoms that has a hydroxyl group is preferably a hydroxyalkyl group having 1 to 4 carbon atoms, more preferably a hydroxyalkyl group having 1 or 2 carbon atoms, and still more preferably a hydroxyalkyl group having 1 carbon atom. In addition, the hydrocarbon group may have two or more hydroxyl groups.

The structure represented by the formula (6) represents a cation of a nitrogen-comprising aliphatic heterocyclic structure having at least one structure represented by the following formula (X). In addition, the nitrogen-comprising aliphatic heterocyclic structure in the formula (6) may be a five-membered ring to an eight-membered ring and is preferably a five-membered ring or a six-membered ring. The nitrogen-comprising aliphatic heterocyclic structure in the formula (6) is preferably, for example, a pyrrolidinium cation.

A method for making the structure represented by the formula (6) be comprised in the molecule of the polyurethane is not particularly limited, but at least one structure represented by the formula (6) is comprised in the molecule of the polyurethane by, for example, reacting an ionic compound having a structure corresponding to the cation of the nitrogen-comprising aliphatic heterocyclic structure represented by the formula (6) and an isocyanate compound.

As the nitrogen-comprising aliphatic heterocyclic structure in the formula (6), the cationic nitrogen-comprising aliphatic heterocyclic structure described in the above-described section of the cationic structure can be used, and a pyrrolidinium cation is particularly preferable.

Examples of the ionic compound having the structure corresponding to the cation of the nitrogen-comprising aliphatic heterocyclic structure in the formula (6) include ionic compounds in which at least one selected from the group consisting of $Z^{15}$, $Z^{16}$, and at least one $Z^{17}$, in a case where $d^5$ is 1 or more, in the formula (6) is a linear or branched divalent hydrocarbon having a hydroxyl group. The structure represented by the formula (6) can be obtained by reacting such an ionic compound and an isocyanate compound. As examples of such ionic compounds, ionic compounds having a pyrrolidinium cation will be shown below.

1-Methyl-1,2-bis(2-hydroxyethyl)pyrrolidinium cation, 1-ethyl-1,2-bis(2-hydroxyethyl)pyrrolidinium cation, 1-butyl-1,2-bis(2-hydroxyethyl)pyrrolidinium cation, 1-methyl-1,2-bis(4-hydroxybutyl)pyrrolidinium cation; and derivatives thereof.

Hereinafter, the structure represented by the formula (X) will be described.

[C8]

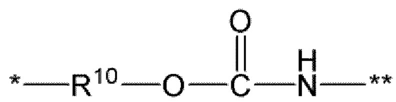

(X)

In the formula (X), $R^{10}$ represents a linear or branched divalent hydrocarbon group, the symbol "*" represents a bonding portion to a nitrogen atom in the formulae (1) to (6) or a bonding portion to a carbon atom in the nitrogen-comprising heterocyclic structure in the formulae (1) to (3) and the formulae (5) and (6), and the symbol "**" represents a bonding portion to a carbon atom in a polymer chain that configures polyurethane having a cationic structure.

$R^{10}$ is preferably a linear or branched alkylene group having 1 to 8 carbon atoms (preferably 1 to 4 carbon atoms and more preferably 1 or 2 carbon atoms). In addition, $R^{10}$ may have an arbitrary substituent, such as a hydroxyl group.

The structure represented by the formula (X) may be a structure that is formed by, for example, reacting an ionic compound having a structure corresponding to a cation of the structure represented by the formulae (1) to (6) and an isocyanate compound. The isocyanate compound is preferably the above-described urethane prepolymer.

Among the structures represented by the formulae (1) to (6), in a case where the cationic structure comprises the structure represented by the formula (1) or the structure represented by the formula (2), the cationic structure is highly stable as a cation and has a high separation rate from the anion, which is a counter ion. Therefore, interaction with the anion of the lithium salt that is comprised as a support electrolyte is likely to occur, separation of the lithium salt is accelerated, and the ion conductivity is likely to improve, which is preferable.

The polyurethane preferably has an ethylene oxide structure represented by the following formula (7) in the molecule. When the polyurethane has the ethylene oxide structure, it is possible to increase the mobility of lithium ions in the polymer electrolyte. In addition, the polyurethane more preferably has a propylene oxide structure represented by the following formula (8) in addition to the ethylene oxide structure. When the polyurethane jointly has the propylene oxide structure, it is possible to suppress the formation of a crystal structure arising from the ethylene oxide structure. As a result, it is possible to increase the mobility of lithium ions in the polymer electrolyte.

[C9]

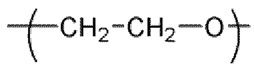

(7)

[C10]

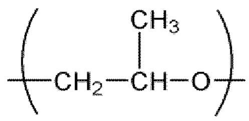 (8)

As a more preferable specific aspect, the polyurethane preferably has at least the ethylene oxide structure represented by the formula (7) between a first urethane bond and a second urethane bond that are adjacent to each other. In particular, the polyurethane preferably further has the propylene oxide structure represented by the formula (8) between the first urethane bond and the second urethane bond. At this time, provided that the average number of moles of the ethylene oxide structure represented by the formula (7) added is $m^1$, and the average number of moles of the propylene oxide structure represented by the formula (8) added is $n^1$, $m^1$ and $n^1$ are each independently a natural number of 1 or more. In addition, it is preferable to satisfy $n^1 \leq m^1 \leq 9n^1$. When $n^1 \leq m^1 \leq 9n^1$ is satisfied, crystallization of the polymer main chain is further suppressed, and it is possible to further suppress a decrease in mobility of lithium ions under low temperature environments.

$m^1$ is preferably 1 to 110 and more preferably 34 to 102.

$n^1$ is preferably 1 to 55 and more preferably 5 to 43.

In addition, in a case where a plurality of the ethylene oxide structures and a plurality of the propylene oxide structures are included, each structure may be a block-copolymerized structure or a random-copolymerized structure.

A method for producing such a polyurethane is not particularly limited, and such a polyurethane can be produced by, for example, using a polyethylene glycol-propylene glycol copolymer as a polyol and reacting the polyol with an isocyanate compound. In addition, the polyurethane can also be produced by reacting, as an isocyanate compound, a urethane prepolymer obtained by reacting a polyethylene glycol-propylene glycol copolymer and an isocyanate compound with a polyol.

One example of the above-described specific aspect will be shown in the following formula (9). When the polyurethane has the ethylene oxide structure and the propylene oxide structure between the two urethane bonds adjacent to each other as shown in the formula (9), crystallization of the polymer main chain is suppressed even when the molecular amount between the crosslinking points is large, and it is possible to suppress a decrease in mobility of lithium ions particularly under low temperature environments. As a result, ion conductivity and rate characteristics are likely to improve.

[C11]

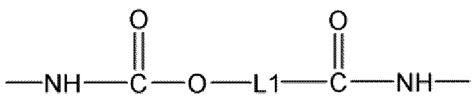 (9)

In the formula (9), L1 is a linking group having at least one ethylene oxide structure represented by the formula (7), and the linking group L1 preferably further has at least one propylene oxide structure represented by the above formula (8).

In a case where the linking group L1 has the ethylene oxide structure represented by the formula (7) and the propylene oxide structure represented by the formula (8), it is preferable that the average number of moles $m^1$ of the ethylene oxide structure represented by the formula (7) added and the average number of moles $n^1$ of the propylene oxide structure represented by the formula (8) added are each independently a natural number of 1 or more and $n^1 \leq m^1 \leq 9n^1$. When $n^1 \leq m^1 \leq 9n^1$ is satisfied, crystallization of the polymer main chain is further suppressed, and it is possible to further suppress a decrease in mobility of lithium ions under low temperature environments.

$m^1$ is preferably 1 to 110 and more preferably 34 to 102.

$n^1$ is preferably 1 to 55 and more preferably 5 to 43.

The structure represented by the formula (9) can be obtained, for example, using a polyether polyol obtained by ring-opening polymerization of ethylene oxide and propylene oxide.

In a case where a plurality of the ethylene oxide structures and a plurality of the propylene oxide structures are included in the linking group L1, each structure may be a block-copolymerized structure or a random-copolymerized structure. In particular, the linking group L1 preferably has a random copolymer structure of the ethylene oxide structure and the propylene oxide structure.

The linking group L1 may further comprise a diol structure having 1 to 6 carbon atoms (preferably 4 to 6 carbon atoms) to an extent that the effect of the present disclosure is not impaired. For example, the linking group may comprise a diol structure between the ethylene oxide structure and the propylene oxide structure. The diol structure is represented by $-O-R^x-O-$, and $R^x$ is an alkylene group having 1 to 6 carbon atoms (preferably 4 to 6 carbon atoms).

The structure of the polyurethane can be confirmed by analysis with known means, for example, thermal decomposition GC/MS, TF-IR, NMR, or the like.

(Anionic structure)

Examples of the anion that the polyurethane comprises include fluoroalkylsulfonimide anion, fluorosulfonimide anion, fluoroalkylsulfonate anion, fluorosulfonic acid anion, fluoroalkylcarboxylic acid anion, fluoroalkylmethide anion, fluoroboric acid anion, fluorophosphoric acid anion, dicyanamide anion, thiocyanate anion, bisoxalatoborate anion, perchlorate anion, and derivatives thereof.
Specific examples of the fluoroalkylsulfonimide anion include fluoroalkylsulfonimide anions having a fluoroalkyl group having from 1 to 6 carbon atoms, such as bis(trifluoromethanesulfonyl)imide anion, bis(pentafluoroethanesulfonyl) imide anion, bis(heptafluoropropansulfonyl)imide anion, bis (nonafluorobutanesulfonyl)imide anion, bis(dodecafluoropentanesulfonyl)imide anion, and bis(perfluorohexanesulfonyl) imide anion, and cyclic fluoroalkylsulfonylimide anions such as N,N-hexafluoropropane-1,3-disulfonylimide.
Specific examples of the fluorosulfonyl imide anion include bis(fluorosulfonyl)imide anions.
Specific examples of the fluoroalkylsulfonic acid anion include trifluoromethanesulfonate anion, fluoromethanesulfonate anion, perfluoroethanesulfonate anion, perfluoropropanesulfonate anion, perfluorobutanesulfonate anion, perfluoropentanesulfonate anion, perfluorohexanesulfonate anion, and perfluorooctanesulfonate anion.
Specific examples of the fluoroalkylcarboxylic acid anion include trifluoroacetic acid anion, perfluoropropionic acid anion, perfluorobutyric acid anion, perfluorovaleric acid anion, and perfluorocaproic acid anion.
Specific examples of the fluoroalkylmethide anion include fluorinated alkylsulfonyl methide anions such as tris(trifluoromethanesulfonyl)methide anions, tris(perfluoroethanesulfonyl)methide anions, tris(perfluoropropansulfonyl) methide anions, tris(perfluorobutansulfonyl)methide anion, tris(perfluoropentansulfonyl)methide anion, tris(perfluorohexanesulfonyl)methide anion, and tris(perfluorooctansulfonyl)methide anion.
Specific examples of the fluoroboric acid anion include tetrafluoroboric acid anion.
Specific examples of the fluorophosphoric acid anion include hexafluorophosphoric acid anion.
Among these anions, at least one selected from the group consisting of fluoroalkylsulfonimide anion, fluorosulfonimide anion, fluoroboric acid anion, dicyanamide anion, and thiocyanate anion is particularly preferable since a decrease in conductivity under low temperature environments is smaller.

(Lithium salt)

The polymer electrolyte comprises a lithium salt. The lithium salt is preferably comprised as a support electrolyte in lithium ion secondary batteries. Examples of the lithium salt include at least one selected from the group consisting of $LiClO_4$, $LiBF_4$, $LiPF_6$, $LiAlCl_4$, $LiSbF_6$, LiSCN, $LiCF_3SO_3$, $LiAsF_6$, lower aliphatic lithium carboxylate, LiCl, LiBr, LiI, lithium chloroborane, lithium tetraphenylborate, $LiN(CF_3SO_3)_3$, and $LiN(C_2F_5SO_2)_2$.
Among these, at least one selected from the group consisting of $LiN(CF_3SO_3)_3$, $LiN(C_2F_5SO_2)_2$, and $LiClO_4$ is preferable. These lithium salts are highly chemically stable to lithium-based active materials and do not easily allow an insulating coating film to be formed on the negative electrode interface due to the decomposition of the lithium salt. Therefore, resistance on the negative electrode interface is less likely to vary. The lithium salt can be used singly, or two or more lithium salts can be used in combination.
The content of the lithium salt is preferably 0.8 to 40.0 parts by mass, more preferably 5.0 to 40.0 parts by mass, still more preferably 5.0 to 15.0 parts by mass, and particularly preferably 5.0 to 10.0 parts by mass relative to 100 parts by mass of the polyurethane in the polymer electrolyte. When the content of the lithium salt is within this range, the lithium salt is well compatible with the polyurethane and is not precipitated even at low temperatures, and high ion conductivity can be obtained.
The kind or content of the lithium salt that is comprised in the polymer electrolyte can be measured by LC-MS or the like after solvent extraction.
The polymer electrolyte can be, for example, a cured product of a mixture comprising at least one polyol, at least one isocyanate compound, an anion, an ionic compound having a functional group capable of reacting with an isocyanate group and comprising a cationic structure, and a lithium salt. Here, the mixture comprises at least one selected from the group consisting of a polyol having at least three hydroxyl groups as the at least one polyol and an isocyanate compound having at least three isocyanate groups as the at least one isocyanate compound.
When the mixture comprises at least one selected from the group consisting of a polyol having at least three hydroxyl groups as the at least one polyol and an isocyanate compound having at least three isocyanate groups as the at least one isocyanate compound, the cured product of the mixture comprises a polyurethane having a three-dimensional cross-linked structure.
Specifically, in the mixture, for example, a raw material mixture comprising the following i), ii), or iii) is preferably

used as the raw material mixture of the polyurethane:

i) a combination of a polyol having at least three hydroxyl groups and an isocyanate compound having at least two isocyanate groups;
ii) a combination of a polyol having at least two hydroxyl groups and an isocyanate compound having at least three isocyanate groups;
iii) a combination of a polyol having at least three hydroxyl groups and an isocyanate compound having at least three isocyanate groups.

The polyol is not particularly limited, and the above-described polyols can be used. That is, it is possible to use, for example, polyols having the ethylene oxide structure represented by the formula (7) and the propylene oxide structure represented by the formula (8) and having a molecular weight of 3000 to 5000.
The isocyanate compound is not particularly limited, and the above-described isocyanate compounds can be used. That is, for example, a urethane prepolymer can be used.
As the ionic compound comprising an anion and a cationic structure having a reactive functional group capable of reacting with an isocyanate group, it is possible to use, for example, an ionic compound having a structure corresponding to the cationic structures of the structures represented by the formulae (1) to (6).
The above-described lithium salts can be used as the lithium salt.
An electrolyte solution may comprise a well-known solvent as necessary. Examples of the solvent include methyl ethyl ketone.

<Liquid electrolyte>

The polymer electrolyte may comprise a liquid electrolyte to an extent that the effect of the present disclosure is not impaired and safety in high temperature ranges is not impaired. Examples of the liquid electrolyte include an ionic liquid and a non-aqueous electrolytic solution.
Specific examples of the ionic liquid include the following combinations of a cation and an anion.
Examples of the cation include at least one selected from the group consisting of quaternary ammonium, imidazolium, pyridinium, pyrrolidinium, and piperidinium.
Examples of the anion include at least one selected from the group consisting of a fluoroalkylsulfonylimide anion, a fluorosulfonylimide anion, a fluoroalkylsulfonate anion, a fluorosulfonate anion, a fluoroalkylcarboxylic acid anion, a fluoroalkylmethide anion, a fluoroboric acid anion, a fluorophosphoric acid anion, a dicyanamide anion, a thiocyanate anion, a bisoxalato boric acid anion, a perchloric acid anion, and derivatives thereof.
The non-aqueous electrolytic solution is a liquid comprising about 1 mole of a lithium salt dissolved in a non-aqueous solvent. Examples of the non-aqueous solvent include ethylene carbonate, propylene carbonate, dimethyl carbonate, diethyl carbonate, ethyl methyl carbonate, and the like. Examples of the lithium salt include $LiPF_6$, $LiBF_4$, $LiClO_4$, and the like.
When the polymer electrolyte comprises the liquid electrolyte, there are cases where the ion conductivity improves, but the content of the liquid electrolyte is preferably set to, for example, 10 parts by mass or less, 5 parts by mass or less, 1 part by mass or less, or 0.5 parts by mass or less relative to 100 parts by mass of the polyurethane in the polymer electrolyte in order to avoid a decrease in mechanical strength at high temperatures.
The polymer electrolyte may also comprise a non-conductive filler, such as silica, a silica powder, titanium oxide, zinc oxide, and calcium carbonate, as necessary. When added to a coating material for forming an electrolyte, these non-conductive fillers exhibit a function as a film-forming assistant at the time of coating the coating material in an electrolyte layer formation step. The content rate of such a non-conductive filler is preferably 0.1 to 10 parts by mass relative to 100 parts by mass of a resin forming the electrolyte layer.
In addition, the polymer electrolyte may comprise a conductive filler as necessary to an extent that the effect of the present disclosure is not impaired. As the conductive filler, fine conductive particles of carbon black, zinc oxide, tin oxide, titanium oxide, and the like can be used. In particular, in a case where the polymer electrolyte is used as a binder for a positive or negative electrode active material, the polymer electrolyte comprising the conductive filler is capable of decreasing the internal resistance of the secondary battery. The content of the conductive filler is preferably 0.5 to 5 parts by mass relative to 100 parts by mass of the polyurethane comprised in the polymer electrolyte.

(Method for forming polymer electrolyte layer)

A method for forming the polymer electrolyte layer is not particularly limited. For example, the above-described materials of the polymer electrolyte are used and mixed by a well-known method to obtain an electrolyte solution for forming the polymer electrolyte layer. The electrolyte solution is applied by a well-known application method such as bar

coating, spin coating, or roll coating, and the polymer material that is comprised in the electrolyte solution is then polymerized by well-known means such as UV, to form the polymer electrolyte layer. The polymer electrolyte layer can be formed at a desired position, such as on the positive electrode or on the negative electrode.

The thickness of the polymer electrolyte layer as a bulk electrolyte is preferably from 5.0 μm to 100.0 μm.

[Examples]

The following describes specific Examples and Comparative Examples related to the present disclosure. However, the present disclosure is not limited to the following Examples and Comparative Examples.

<Synthesis of polyol>

(Polyether polyol A-1)

16.4 parts by mass of 1,4-butanediol (manufactured by Tokyo Chemical Industry Co., Ltd.) and 2 parts by mass of KOH (manufactured by Kojundo Chemical Laboratory Co., Ltd.) were charged into an autoclave and stirred under reduced pressure at 120°C to be uniformly dissolved and dehydrated. Next, the inside of the system was depressurized to -0.1 MPa at 100°C, and 983.6 parts by mass of an alkylene oxide obtained by mixing EO and PO at the molar fraction of 9:1 was continuously introduced thereinto for 300 minutes to hold the gauge pressure at about 0.5 MPa. A reaction was performed at the same temperature for 170 minutes until the pressure reached 0.2 MPa or less, the temperature was then raised up to 130°C for 20 min, the components were stirred for 150 minutes until the pressure change in the autoclave reached 0.01 MPa/30 min, thereby obtaining a polyol. 18 parts by mass of water was added to the resultant polyol, the polyol was stirred at 90°C for 30 minutes, 50 g of an alkali adsorbent (KYOWAAD 600, manufactured by Kyowa Chemical Industry Co., Ltd.) was added thereto, and the polyol was further stirred for 30 minutes. The resultant liquid was filtered, and the adsorbent was removed. Subsequently, the liquid was dried under reduced pressure at 130°C, thereby obtaining a polyether polyol A-1 having a hydroxyl value of 22.5 mgKOH/g and Mn of 5,000.

(Polyether polyols A-2 to A-5)

Polyether polyols A-2 to A-5 were obtained in the same manner as the polyether polyol A-1, except that the amount of 1,4-butanediol blended, and the molar mixing ratio and amounts blended of EO and PO were changed as shown in Table 1.

[Table 1]

| | A-1 | A-2 | A-3 | A-4 | A-5 |
|---|---|---|---|---|---|
| Amount of 1,4-butanediol blended (parts by mass) | 16.4 | 16.4 | 41.1 | 27.4 | 82.6 |
| Alkylene oxide mixing ratio (EO/PO) | 90:10 | 80:20 | 90:10 | 90:10 | 90:10 |
| Amount of alkylene oxide blended | 983.6 | 983.6 | 958.9 | 972.6 | 917.4 |
| Molecular weight of polyether polyol Mn | 5000 | 5000 | 2000 | 3000 | 1000 |
| Hydroxyl value (mgKOH/g) | 22.5 | 22.4 | 56.1 | 37.4 | 112.2 |
| Average number of moles added m | 102 | 91 | 41 | 61 | 20 |
| Average number of moles added n | 9 | 17 | 3 | 5 | 2 |

In the table, the alkylene oxide mixing ratio is the molar fraction.

(Polyether polyol A-6)

In a reaction vessel, a mixture of 216.3 parts by mass (3.0 mol) of dry tetrahydrofuran, 172.2 parts by mass (2.0 mol) of dry 3-methyltetrahydrofuran (mol mixing ratio: 6/4) was held at a temperature of 15°C. 16.4 parts by mass of 70% perchloric acid and 120 parts by mass of acetic anhydride were added thereto, and a reaction was performed for five hours to produce a reaction mixture. Next, the reaction mixture was poured into 600 parts by mass of a 20% sodium hydroxide aqueous solution and purified. Furthermore, the remaining water and solvent component were removed under reduced pressure, and a polyether polyol A-6 having a hydroxyl value of 37.4 mgKOH/g and Mn of 3,000 was obtained.

(Polyether polyol A-7)

A polyether polyol A-7 having a hydroxyl value of 93.5 mgKOH/g and Mn of 1,200 was obtained in the same manner as the polyether polyol A-6, except that the reaction time was changed to two hours.

(Polyether polyols A-8 to A-15)

Polyether polyols A-8 to A-15 are shown in Table 2 below.

[Table 2]

| | Polyether polyol | EO/PO ratio | Molecular weight Mn | Hydroxyl value (mgKOH/g) | Average number of moles added | |
|---|---|---|---|---|---|---|
| | | | | | m | n |
| A-8 | Polyoxyethylene polyoxypropylene copolymer diol (trade name : ADEKA POLYOL PR5007, manufactured by ADEKA Corporation) | 70:30 | 5000 | 22.5 | 80 | 26 |
| A-9 | Polyoxyethylene polyoxypropylene copolymer triol (trade name : ADEKA POLYOL GR3308, manufactured by ADEKA Corporation) | 80:20 | 3400 | 51.0 | 62 | 12 |
| A-10 | Polyoxyethylene polyoxypropylene copolymer diol (trade name : ADEKA POLYOL PR3007, manufactured by ADEKA Corporation) | 70:30 | 3000 | 38.0 | 48 | 16 |
| A-11 | Polyoxyethylene polyoxypropylene copolymer triol (trade name : ADEKA POLYOL GR2505, manufactured by ADEKA Corporation) | 50:50 | 2500 | 69.0 | 28 | 22 |
| A-12 | Polyoxyethylene polyoxypropylene copolymer diol (trade name : ADEKA POLYOL PR3005, manufactured by ADEKA Corporation) | 50:50 | 3000 | 39.0 | 34 | 26 |
| A-13 | Polyoxyethylene polyoxypropylene copolymer diol (trade name : PEPOL B-182, manufactured by TOHO Chemical Industry Co., Ltd.) | 25:75 | 2200 | 39.3 | 13 | 28 |
| A-14 | Polyethene glycol (trade name : Polyethene glycol600, manufactured by Tokyo Chemical Industry Co., Ltd.) | 100:0 | 600 | 187.0 | 14 | 0 |
| A-15 | Polypropylene glycol (trade name : Poly(propylene glycol), manufactured by Sigma-Ardrich) | 0:100 | 400 | 263.0 | 0 | 7 |

In the table, the EO/PO ratio indicates the alkylene oxide mixing ratio (molar fractions).

(Isocyanate group-terminated prepolymer B-1)

100.0 parts by mass of the polyether polyol A-1 was gradually added dropwise to 16.3 parts by mass of an isocyanate C-1 polymeric MDI (trade name: MILLIONATE MR-200, manufactured by Tosoh Corporation) in a reaction vessel under a nitrogen atmosphere while the temperature in the reaction vessel was held at 65°C. After the end of the dropwise addition, a reaction was performed at 65°C for 3.5 hours. The resultant reaction mixture was cooled to room temperature, and 49.8 parts by mass of methyl ethyl ketone was added thereto, thereby obtaining a solution of an isocyanate group-terminated prepolymer B-1 having an isocyanate group content of 2.5% by mass.

(Isocyanate group-terminated prepolymers B-2 to B-15)

Isocyanate group-terminated prepolymers B-2 to B-15 were synthesized in the same manner as the isocyanate

group-terminated prepolymer B-1, except that the kinds and amounts blended of an isocyanate and a polyol that were used for a reaction were changed as shown in Tables 3 and 4.

[Table 3]

| Isocyanate | |
|---|---|
| Polymeric MDI (trade name : MILLIONATE MR200, manufactured by Nippon Polyurethane Industry Co. Ltd.) | D-1 |
| 1,4-phenylene diisocyanate (manufactured by Tokyo Chemical Industry Co., Ltd.) | D-2 |
| Hexamethylene diisocyanate (trade name : DURANATE 50M-HDI, manufactured by Asahi Kasei Corporation) | D-3 |

[Table 4]

| Isocyanate group-terminated prepolymer | Polyol (parts by mass) | | Isocyanate (parts by mass) | | Isocyanate content (% by mass) |
|---|---|---|---|---|---|
| B-1 | A-1 | 120.5 | D-1 | 19.6 | 2.5 |
| B-2 | A-2 | 120.5 | D-1 | 19.6 | 2.6 |
| B-3 | A-9 | 104.4 | D-2 | 35.6 | 2.8 |
| B-4 | A-8 | 120.4 | D-1 | 19.6 | 2.8 |
| B-5 | A-3 | 99.6 | D-1 | 40.5 | 2.7 |
| B-6 | A-4 | 110.2 | D-1 | 29.9 | 2.7 |
| B-7 | A-10 | 109.8 | D-1 | 30.2 | 2.6 |
| B-8 | A-11 | 106.3 | D-3 | 33.7 | 2.9 |
| B-9 | A-5 | 77.2 | D-1 | 62.8 | 3.1 |
| B-10 | A-12 | 109.2 | D-1 | 30.8 | 3.2 |
| B-11 | A-13 | 109.0 | D-1 | 31.0 | 2.5 |
| B-12 | A-6 | 83.5 | D-1 | 56.5 | 2.7 |
| B-13 | A-7 | 110.2 | D-1 | 29.9 | 2.8 |
| B-14 | A-14 | 59.5 | D-1 | 80.6 | 3.3 |
| B-15 | A-15 | 48.2 | D-1 | 91.8 | 3.4 |

<Synthesis of ionic compounds>

(Ionic compound I-01)

A stirring bar and 60 ml of tetrahydrofuran (THF, manufactured by Kanto Chemical Co., Inc.) were charged into an eggplant flask equipped with a Dimroth condenser, 24.0 g (0.60 mol) of sodium hydride (60% by mass, dispersed in liquid paraffin, manufactured by Tokyo Chemical Industry Co., Ltd.) was dispersed, and the eggplant flask was cooled in an ice bath. A solution of 10.2 g (0.15 mol) of imidazole (manufactured by Tokyo Chemical Industry Co., Ltd.) dissolved in 60 ml of THF was slowly added dropwise, the ice bath was then removed, and the components were stirred at room temperature for two hours. 47.6 g (0.38 mol) of 2-bromoethanol (manufactured by Tokyo Chemical Industry Co., Ltd.) was added thereto at room temperature and then heated and refluxed for seven hours at 70°C. A reaction liquid after the reaction was filtered, an insoluble matter was washed off with THF, and the solvent of the resultant filtrate was distilled away under reduced pressure. The resultant product was dissolved in 200 ml of dichloromethane, an aqueous solution in which 43.6 g (0.15 mol) of lithium bis(trifluoromethanesulfonyl)imide (manufactured by Tokyo Chemical Industry Co., Ltd.) had been dissolved as an anion raw material was added thereto, and the components were stirred at room temperature for 10 hours. The resultant solution was separated to obtain an organic layer. This organic layer was washed with pure water three times. Next, the dichloromethane was distilled away under reduced pressure to obtain an ionic compound I-01. The ionic compound I-01 is a compound represented by the following formula.

[C12]

I-01

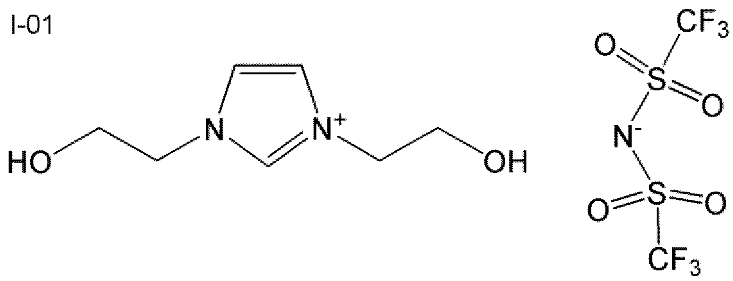

(Ionic compounds I-02 and 03)

Ionic compounds I-02 and 03 were obtained in the same manner as in the synthesis of the ionic compound I-01, except that the anion raw material and the amount blended thereof were changed as shown in Table 5. The ionic compounds I-02 and I-03 are compounds represented by the following formulae:

[C13]

I-02

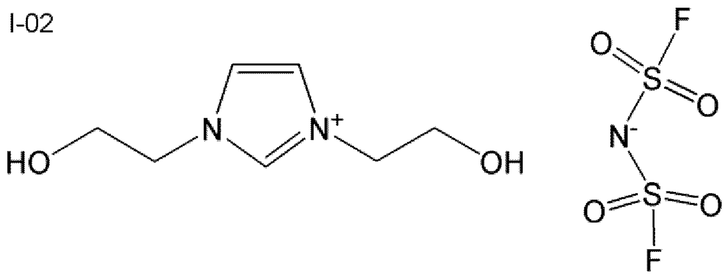

[C14]

I-03

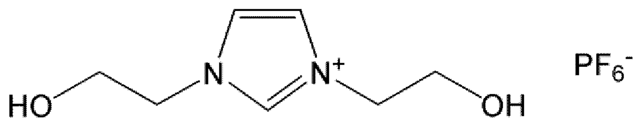

[Table 5]

| Ionic compound | Anion raw material | |
|---|---|---|
| | Product name | Mass (g) |
| I-02 | Potassium bis(fluorosulfonyl)imide (manufactured by Fujifilm Wako Pure Chemical Corporation) | 33.3 |
| I-03 | Lithium hexafluorophosphate (manufactured by Fujifilm Wako Pure Chemical Corporation) | 23.1 |

(Ionic compound I-04)

A stirring bar and 50 ml of THF were charged into an eggplant flask equipped with a Dimroth condenser, 20.0 g of sodium hydride (60% by mass, dispersed in liquid paraffin, manufactured by Tokyo Chemical Industry Co., Ltd.) was dispersed, and the eggplant flask was cooled in an ice bath. A solution of 16.8 g (0.15 mol) of 1-(2-hydroxyethyl)imidazole (manufactured by Sigma-Aldrich) dissolved in 50 ml of THF was slowly added dropwise, the ice bath was then removed, and the components were stirred at room temperature for one hour. 20.7 g (0.19 mol) of bromoethane (manufactured by

Tokyo Chemical Industry Co., Ltd.) was added thereto at room temperature and then heated and refluxed for five hours at 80°C. A reaction liquid after the reaction was filtered, an insoluble matter was washed off with THF, and the solvent of the resultant filtrate was distilled away under reduced pressure. The resultant product was dissolved in 150 ml of dichloromethane, an aqueous solution in which 43.6 g (0.15 mol) of lithium bis(trifluoromethanesulfonyl)imide (manufactured by Tokyo Chemical Industry Co., Ltd.) had been dissolved as an anion raw material was added thereto, and the components were stirred at room temperature for 10 hours. The resultant solution was separated to obtain an organic layer. This organic layer was washed with pure water three times. Next, the dichloromethane was distilled away under reduced pressure to obtain an ionic compound I-04. The ionic compound I-04 is a compound represented by the following formula.

[C15]

I-04

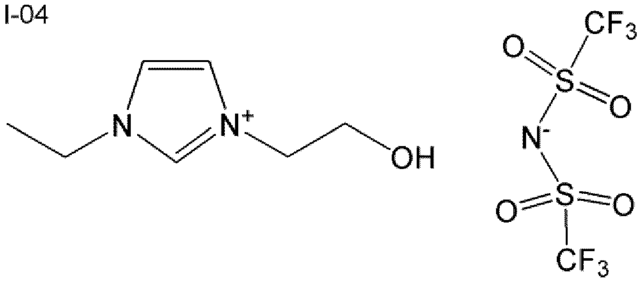

(Ionic compound I-05)

A stirring bar and 50 ml of acetonitrile were charged into an eggplant flask equipped with a Dimroth condenser, and 22.7 g (0.15 mol) of 4-pyridinobutanol (manufactured by Sigma-Aldrich) was charged thereinto and dissolved. 29.1 g (0.19 mol) of 4-bromo-1-butanol (manufactured by Chemical Industry Co., Ltd.) was added dropwise at room temperature for 30 minutes and then heated and refluxed for 12 hours at 90°C. Next, a reaction solution was cooled to room temperature, the acetonitrile was distilled away under reduced pressure, and the reaction solution was washed with 50 ml of diethyl ether three times. The resultant product was dissolved in 150 ml of dichloromethane, an aqueous solution in which 35.1 g (0.16 mol) of potassium bis(fluorosulfonyl)imide had been dissolved as an anion raw material was added thereto, and the components were stirred at room temperature for 12 hours. The resultant solution was separated to obtain an organic layer. This organic layer was washed with pure water three times. Next, the dichloromethane was distilled away under reduced pressure to obtain an ionic compound I-05. The ionic compound I-05 is a compound represented by the following formula.

[C16]

I-05

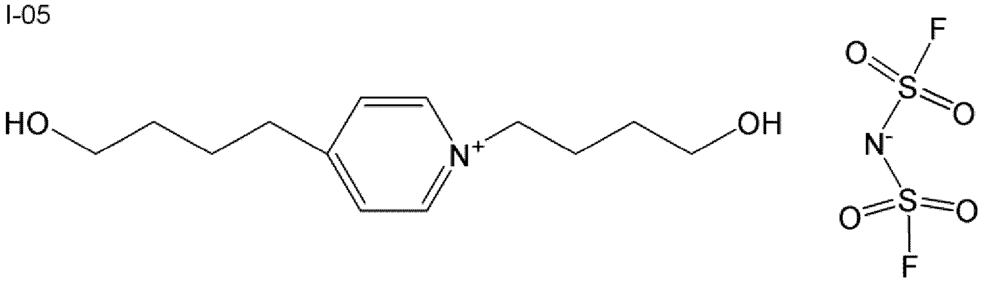

(Ionic compounds I-06 and 07)

Ionic compounds I-06 and 07 were obtained in the same manner as in the synthesis of the ionic compound I-05, except that the anion raw material and the amount blended thereof were changed as shown in Table 6. The ionic compounds 1-06 and I-07 are compounds represented by the following formulae.

[C17]

I-06

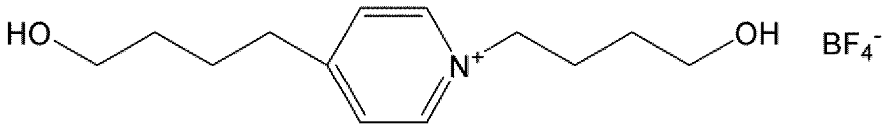

[C18]

I-07

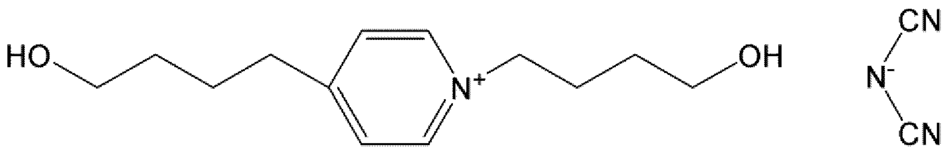

[Table 6]

| Ionic compound | Anion raw material | |
|---|---|---|
| | Product name | Mass (g) |
| I-06 | Sodium tetrafluoroborate (manufactured by Tokyo Chemical Industry Co., Ltd.) | 17.6 |
| I-07 | Sodium dicyanamide (manufactured by Tokyo Chemical Industry Co., Ltd.) | 14.2 |

(Ionic compound I-08)

A stirring bar and 50 ml of THF were charged into an eggplant flask equipped with a Dimroth condenser, 20.0 g (0.50 mol) of sodium hydride (60% by mass, dispersed in liquid paraffin, manufactured by Tokyo Chemical Industry Co., Ltd.) was dispersed, and the eggplant flask was cooled in an ice bath. A solution of 25.2 g (0.15 mol) of 4-(2-ethyl-1H-imidazol-1-yl)butan-1-ol (manufactured by Aurora Fine Chemicals LLC) dissolved in 60 ml of THF was slowly added dropwise, the ice bath was then removed, and the components were stirred at room temperature for two hours. 17.4 g (0.16 mol) of bromoethane was added dropwise thereto at room temperature for 30 minutes and then heated and refluxed for 12 hours at 85°C. Next, 100 ml of pure water was added to a reaction solution, and the solvent was distilled away under reduced pressure. The resultant product was removed by celite filtration, and the solvent was then distilled away again under reduced pressure. The resultant product was dissolved in 100 ml of pure water, an aqueous solution in which 35.1 g (0.16 mol) of potassium bis(fluorosulfonyl)imide had been dissolved as an anion raw material was added thereto, and the components were stirred at room temperature for five hours. 100 ml of ethyl acetate was added to the reaction solution, and an organic layer was washed with pure water three times. Next, the ethyl acetate was distilled away under reduced pressure to obtain an ionic compound I-08. The ionic compound I-08 is a compound represented by the following formula.

[C19]

I-08

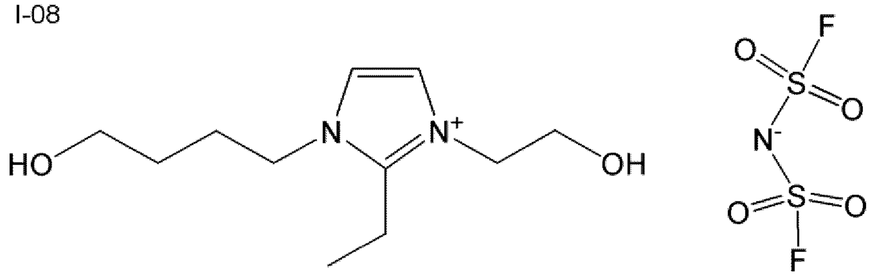

(Ionic compound I-09)

A stirring bar, 15.5 g (68.6 mmol) of 4,5-dibromoimidazole (manufactured by Sigma-Aldrich), 15.2 g (0.11 mol) of 1-bromobutane (manufactured by Tokyo Chemical Industry Co., Ltd.), 27.8 g (0.2 mol) of potassium carbonate (manufactured by Kanto Chemical Co., Inc.), and 100 ml of acetone were added to an eggplant flask equipped with a Dimroth condenser, heated and refluxed overnight at 65°C. After a reaction, a reaction liquid was filtered, the solvent of a filtrate was distilled away under reduced pressure, and a compound was generated by silica gel column chromatography (ethyl acetate). Subsequently, the resultant compound was dissolved in 50 ml of dichloromethane, 17.1 g (0.11 mmol) of iodoethane (manufactured by Tokyo Chemical Industry Co., Ltd.) was added thereto, and the components were heated and refluxed for 18 hours at 40°C. The solvent after the reaction was distilled away under reduced pressure, and the components were washed with diethyl ether to obtain 4,5-dibromoethylbutylimidazolium iodide as a white powder.

Subsequently, this compound was dissolved in 300 ml of distilled THF under a nitrogen atmosphere and cooled to -78°C in a dry ice/methanol bath. Subsequently, 80 ml of n-butyllithium/hexane 2.6 M solution (manufactured by Kanto Chemical Co., Inc.) was slowly added dropwise thereto, and the components were stirred for 30 minutes.

Subsequently, a solution comprising 52.3 g (0.22 mmol) of 2-bromoethoxy-tert-butyldimethylsilane (manufactured by Sigma-Aldrich) dissolved in 100 ml of THF was slowly added dropwise. After the solution was reacted at -78°C for three hours and at room temperature overnight, hydrochloric acid was added to a reaction solution, and the solution was stirred at room temperature for one hour to be desilylated. The solvent was distilled away under reduced pressure, the solution was then separated with ethyl acetate/water, and the solvent was distilled away again under reduced pressure to give a white powder. This white powder was dissolved in 50 ml of dichloromethane, an aqueous solution of 20.6 g (0.07 mol) of lithium bis(trifluoromethanesulfonyl)imide, which was an anion raw material, was added thereto, and the components were stirred at room temperature for eight hours. The resultant solution was separated to obtain an organic layer. This organic layer was washed with pure water three times. Next, the dichloromethane was distilled away under reduced pressure to obtain an ionic compound I-09. The ionic compound I-09 is a compound represented by the following formula.

[C20]

I-09

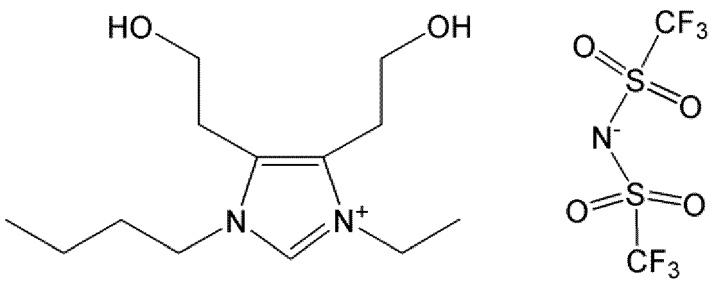

(Ionic compound I-10)

Under a nitrogen atmosphere, 15.0 g (0.13 mol) of imidazole-2-ethanol (manufactured by Sigma-Aldrich) and 9.2 g of sodium hydride (60% by mass, dispersed in liquid paraffin, manufactured by Tokyo Chemical Industry Co., Ltd.) were dissolved in 70 ml of THF. 42.1 g (0.28 mol) of 2-bromoethanol was added dropwise thereto for 30 minutes at room temperature, and the components were then heated and refluxed at 85°C for 12 hours. Subsequently, 100 ml of water was added to a reaction solution, and the solvent was distilled away under reduced pressure. 200 ml of ethanol was added to a

residue and stirred at room temperature, an insoluble matter was removed by celite filtration, and the solvent was then distilled away again under reduced pressure. The resultant product was dissolved in 200 ml of pure water, an aqueous solution of 48.3 g (0.17 mol) of lithium bis(trifluoromethanesulfonyl)imide, which was an anion raw material, was added thereto, and the components were stirred at room temperature for one hour. 200 ml of ethyl acetate was added to the reaction solution, and an organic layer was washed using 120 ml of pure water three times. Next, the solvent was distilled away under reduced pressure to obtain an ionic compound I-10. The ionic compound I-10 is a compound represented by the following formula.

[C21]

I-10

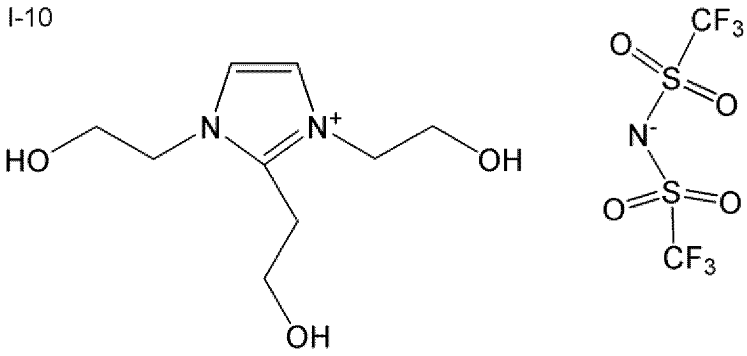

(Ionic compound I-11)

40.0 g (0.25 mol) of 2-hydroxyethyl pyridine (manufactured by Tokyo Chemical Industry Co., Ltd.) was dissolved in 20 ml of acetonitrile, and 41.8 g (0.38 mol) of 3-chloro-1,2-propanediol (manufactured by Fujifilm Wako Pure Chemical Corporation) dissolved in 10 ml of acetonitrile at room temperature was added thereto. After that, the solution was heated and refluxed at 90°C for 72 hours. Subsequently, the solvent was distilled away under reduced pressure, and the resultant reactant was washed with diethyl ether three times. The resultant product was dissolved in 200 ml of pure water, an aqueous solution of 79.6 g (0.28 mol) of lithium bis(trifluoromethanesulfonyl)imide, which was an anion raw material, was added thereto, and the components were stirred at room temperature for five hours. 200 ml of ethyl acetate was added to the reaction solution, and an organic layer was washed using pure water three times. Next, the solvent was distilled away under reduced pressure to obtain an ionic compound I-11. The ionic compound I-11 is a compound represented by the following formula.

[C22]

I-11

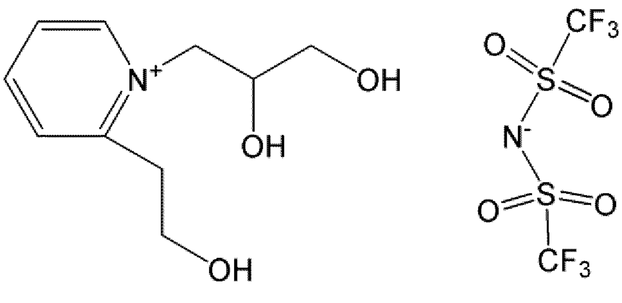

(Ionic compound I-12)

15.0 g (0.12 mol) of 5-methylpyrazine-2-methanol (manufactured by Sigma-Aldrich) and 9.2 g of sodium hydride (60% by mass, dispersed in liquid paraffin, manufactured by Tokyo Chemical Industry Co., Ltd.) were dissolved in 100 ml of THF. 18.9 g (0.13 mol) of iodomethane (manufactured by Tokyo Chemical Industry Co., Ltd.) dissolved in 90 ml of THF was added dropwise thereto for 30 minutes at room temperature, and the solution was then heated and refluxed at 85°C for 12 hours. Next, 100 ml of water was added to a reaction solution, and the solvent was distilled away under reduced pressure.

200 ml of ethanol was added to a residue and stirred at room temperature, an insoluble matter was removed by celite filtration, and the solvent was then distilled away again under reduced pressure. The resultant product was dissolved in 100 ml of pure water, an aqueous solution of 37.3 g (0.13 mol) of lithium bis(trifluoromethanesulfonyl)imide, which was an anion raw material, was added thereto, and the components were stirred at room temperature for one hour. 200 ml of ethyl acetate was added to the reaction solution, and an organic layer was washed using 120 ml of pure water three times. Next, the solvent was distilled away under reduced pressure to obtain an ionic compound I-12. The ionic compound I-12 is a compound represented by the following formula.

[C23]

I-12

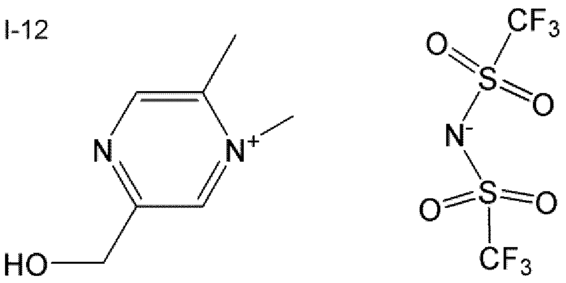

(Ionic compound I-13)

50 ml of purified water and 13.7 g (0.05 mol) of 2-hydroxyethyl triethylammonium iodide (manufactured by Tokyo Chemical Industry Co., Ltd.) were charged into a round bottom flask and stirred for one hour. Next, 15.8 g (0.055 mol) of lithium bis(trifluoromethanesulfonyl)imide (trade name: EF-N115, manufactured by Mitsubishi Materials Electronic Chemicals Co., Ltd.) dissolved in 80 ml of purified water was added dropwise thereto as an anion exchange reagent for 30 minutes, and then stirred at 30°C for three hours. Extraction operation was performed twice on the resultant reaction solution using 100 g of ethyl acetate. Subsequently, the separated ethyl acetate layer was washed with 60 g of purified water three times. Next, ethyl acetate was distilled away under reduced pressure to obtain an ionic compound I-13, in which an anion was bis(trifluoromethanesulfonyl)imide anion. The ionic compound I-13 is a compound represented by the following formula.

[C24]

I-13

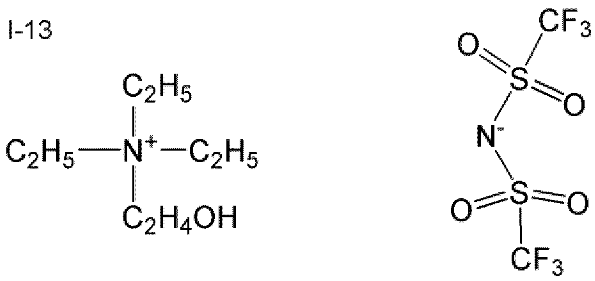

(Ionic compound I-14)

50 ml of purified water and 17.0 g (0.10 mol) of bis(2-hydroxyethyl)dimethylammonium chloride (manufactured by Tokyo Chemical Industry Co., Ltd.) were charged into a round bottom flask and stirred for one hour. Next, 20.6 g (0.11 mol) of lithium bis(fluorosulfonyl)imide (manufactured by Tokyo Chemical Industry Co., Ltd.) dissolved in 60 ml of purified water was added dropwise thereto as an anion exchange reagent for 30 minutes, and then stirred at 30°C for three hours. Subsequently, the separated ethyl acetate layer was washed with 60 g of purified water three times. Next, ethyl acetate was distilled away under reduced pressure to obtain an ionic compound I-14, in which an anion was bis(fluorosulfonyl) imide anion. The ionic compound I-14 is a compound represented by the following formula.

[C25]

I-14

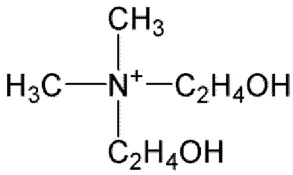

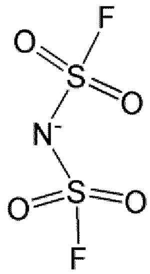

(Ionic compound I-15)

15.0 g (0.07 mol) of N,N'-bis-(2-hydroxyethyl)-2,5-dimethylpiperazine (manufactured by Sigma-Aldrich) and 9.2 g of sodium hydride (60% by mass, dispersed in liquid paraffin, manufactured by Tokyo Chemical Industry Co., Ltd.) were dissolved in 100 ml of THF. 11.6 g (0.08 mol) of iodomethane dissolved in 90 ml of THF was added dropwise thereto for 30 minutes at room temperature, and the solution was heated and refluxed at 85°C for 12 hours. Next, 100 ml of water was added to the reaction solution, and the solvent was distilled away under reduced pressure. 200 ml of ethanol was added to a residue and stirred at room temperature, an insoluble matter was removed by celite filtration, and the solvent was then distilled away again under reduced pressure. The resultant product was dissolved in 100 ml of pure water, an aqueous solution of 23.0 g (0.08 mol) of lithium bis(trifluoromethanesulfonyl)imide, which was an anion raw material, was added thereto, and the components were stirred at room temperature for one hour. 200 ml of ethyl acetate was added to the reaction solution, and an organic layer was washed using 120 ml of pure water three times. Next, the solvent was distilled away under reduced pressure to obtain an ionic compound I-15. The ionic compound I-15 is a compound represented by the following formula.

[C26]

I-15

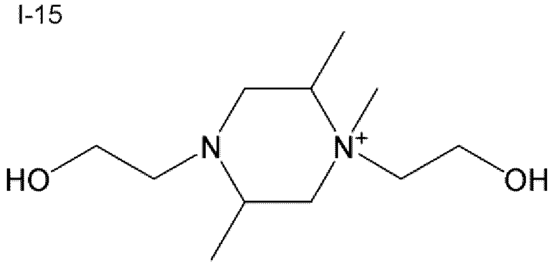

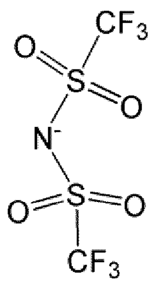

(Ionic compound I-16)

12.9 g (0.10 mol) of 2-(2-hydroxyethyl)-1-methylpyrrolidine (manufactured by Tokyo Chemical Industry Co., Ltd.) and 8.1 g of sodium hydride (60% by mass, dispersed in liquid paraffin, manufactured by Tokyo Chemical Industry Co., Ltd.) were dissolved in 90 ml of THF. Next, the reaction system was put into a nitrogen atmosphere and cooled with ice. 16.8 g (0.11 mol) of bromoethanol dissolved in 100 ml of THF was added dropwise thereto for 30 minutes, the temperature was then raised to room temperature, and the components were stirred for one hour. A reaction solution was warmed, heated and refluxed at 85°C for 15 hours. Next, 100 ml of water was added to the reaction solution, and the solvent was distilled away under reduced pressure. 80 ml of ethanol was added to a residue and stirred at room temperature, an insoluble matter was removed by celite filtration, and the solvent was then distilled away again under reduced pressure. The resultant product was dissolved in 160 ml of pure water, an aqueous solution in which 31.6 g (0.11 mol) of lithium bis(trifluoromethanesulfonyl)imide had been dissolved as an anion raw material was added thereto, and the components were stirred at room temperature for one hour. 70 ml of chloroform was added to the reaction solution, and washing operation was performed three times using 60 ml of an aqueous solution of 5% by mass of sodium carbonate. Next, the chloroform was distilled away under reduced pressure to obtain an ionic compound I-16. The ionic compound I-16 is a compound represented by the following formula.

[C27]

I-16

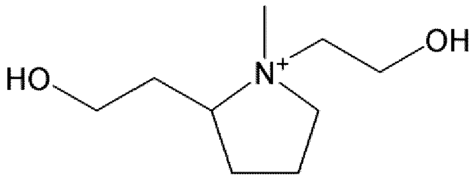

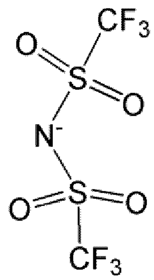

[Example 1]

(Preparation of polymer electrolyte)

As materials for an electrolyte, the following materials were stirred and mixed to obtain an electrolyte solution.

| | |
|---|---|
| Polyol A-1 | 81.1 parts by mass |
| Isocyanate-terminated prepolymer B-1 | 75.2 parts by mass |
| Ionic compound I-1 | 2.7 parts by mass |
| Lithium salt E-1 (lithium bis(trifluoromethanesulfonyl)imide (manufactured by Tokyo Chemical Industry Co., Ltd.)) | 13.6 parts by mass |
| methyl ethyl ketone (MEK) | 127.5 parts by mass |

(Measurement of volume expansion rate by MEK immersion method)

A test specimen of the volume expansion rate by an MEK immersion method was manufactured as described below.

A predetermined amount of the electrolyte solution obtained in Example 1 was added to an aluminum mold having a surface coated with a fluorine resin so that the film thickness reached 200 μm. Next, the mold was placed on a sunflower stand and dried until the viscosity increased to an extent that the surface of a film did not flow, then, placed on a horizontal stand, and dried at 30°C for 10 hours.

Next, the electrolyte solution was heated at 120°C for one hour to cross-link and cure the electrolyte solution.

After being cured, the electrolyte solution was left to stand in an environment of 23°C and 40%RH for 24 hours, the electrolyte film was peeled off from the aluminum mold, and a sheet having a thickness of 200 μm was manufactured. The resultant sheet of the polymer electrolyte was cut to 50 mm x 50 mm, left to stand under an environment of 23°C and 40% RH for 24 hours, and used as a test specimen.

First, the initial weight in air (W1) and the initial weight in water (W2) were measured under an environment of 23°C and 40%. Next, the test specimen after the measurement of the initial weight was immersed in MEK at 23°C for 48 hours. Immediately after the test specimen was removed from MEK, MEK on the surface was wiped off with a nonwoven fabric, the test specimen was put into a weighing bin that had been weighed in advance, and the weight after immersion in air (W3) and the weight after immersion in water (W4) were measured. The volume expansion rate after MEK immersion was calculated by the following formula.

$$\text{Volume expansion rate (\%)} = ((W3 - W4) - (W1 - W2))/(W1 - W2) \times 100$$

W1: Initial weight in air
W2: Initial weight in water
W3: Weight after immersion in air
W4: Weight after immersion in water

(Measurement of ion conductivity at room temperature (25°C))

The electrolyte solution obtained in Example 1 was applied to a 100 μm-thick aluminum plate using a bar coater

and heated at 120°C for one hour, thereby obtaining a polymer electrolyte film according to Example 1. The film thickness after curing was 50 μm.

The resultant polymer electrolyte film was blanked into a diameter of 50 mm per aluminum substrate and dried in a vacuum at 80°C for 48 hours. After that, the polymer electrolyte film was injected into an argon-substituted glove box (temperature: 25°C, dew point: -70°C), the AC impedance between electrodes was measured at an applied voltage of 10 mV within a frequency range of 100 MHz to 1 Hz using an impedance analyzer E4990A (manufactured by Keysight Technologies), a bulk resistance value Rb (Ω) was obtained from a real impedance intercept of the resultant cole-cole plot, and the ion conductivity was obtained from the following formula.

$$\sigma = L/Rb \times S$$

(σ: ion conductivity ($S \cdot cm^{-1}$), L: specimen thickness (cm), S: specimen area ($cm^2$))

(Measurement of ion conductivity at low temperature (5°C))

The resultant polymer electrolyte film was blanked into a diameter of 10 mm per aluminum substrate and dried in a vacuum at 80°C for 48 hours. After that, the polymer electrolyte film was injected into an argon-substituted glove box (temperature: 25°C, dew point: -70°C) and incorporated into an all-solid-state battery evaluation cell (manufactured by Hohsen Corp.).

The evaluation cell into which the polymer electrolyte film had been incorporated was injected into a low-temperature environmental tester and left to stand at 5°C for one hour. After that, the ion conductivity at a low temperature was obtained in the same manner as in the above-described measurement.

<Manufacture of secondary battery>

1. Configuration in which the polymer electrolyte of the present disclosure is used as a bulk electrolyte

(Manufacture of negative electrode)

A 20 mm x 20 mm and 60 μm-thick lithium foil (manufactured by Honjo Metal Co., Ltd.) was laminated on a 20 mm x 30 mm and 20 μm-thick copper foil so as to leave a 10 mm non-laminated end portion on one side and press-fitted to manufacture a negative electrode. The thickness of the manufactured negative electrode was 70 μm. A 5 mm-wide copper tab was joined to the negative electrode by performing nickel plating on the non-laminated end portion on one side.

(Manufacture of positive electrode)

7 parts by mass of the KUREHA KH polymer L#1120 (manufactured by Kureha Corporation) as an active material binder and 5 parts by mass of DENKA BLACK Li-100 (manufactured by Denka Company Limited) as a conductive assistant were mixed with 100 parts by mass of lithium cobaltate (manufactured by Fujifilm Wako Pure Chemical Corporation), and 40 parts by mass of N-methyl pyrrolidone was added thereto and mixed and stirred therewith. Next, the resultant slurry was applied onto a 15 mm x 25 mm and 20 μm-thick rolled aluminum foil so as to leave a 10 mm non-applied end portion on one side, dried at 100°C for 30 minutes, and pressed to obtain a positive electrode. The thickness of the positive electrode was 80 μm.

A 5 mm-wide aluminum tab was joined to the non-applied end portion on one side of the positive electrode.

(Formation of polymer electrolyte layer)

The electrolyte solution obtained in Example 1 was applied to the entire surface of the obtained positive electrode coated with the active material using a bar coater, dried with air at 23°C for 10 minutes, then, heat-cured at 120°C for one hour. The film thickness after curing was 60 μm.

(Manufacture of secondary battery in which polymer electrolyte is used as bulk electrolyte)

The positive electrode coated with the polymer electrolyte was dried in a vacuum at 80°C for 48 hours. After that, the polymer electrolyte film was injected into an argon-substituted glove box (temperature: 25°C, dew point: -70°C), and a polyimide sheet blanked into a window frame shape so as to cover the outer circumferential portion of the positive electrode surface was sticked thereto, thereby forming a short-circuit prevention layer. Next, the positive electrode and the negative electrode were laminated together such that the polymer electrolyte layer of the positive electrode coated with the polymer

electrolyte and a lithium layer of the negative electrode corresponded to each other. The laminate was sandwiched between aluminum laminate films and vacuum-packed, thereby obtaining a secondary battery according to Example 1.

<Battery characteristics evaluation>

(Rate characteristics)

A theoretical capacity was obtained from the total mass of lithium cobaltate that was comprised in the positive electrode. A charge-discharge test was performed at 25°C on a prototyped secondary battery using a charge-discharge device BCS-805 (manufactured by Bio-Logic Science Instruments).

A theoretical capacity was obtained from the total mass of lithium cobaltate that was comprised in the positive electrode, and in a first cycle,

constant-current charge at a charge rate of 0.05 C, two-hour charge with a cut-off value of 3.9 V,
constant-current discharge at a discharge rate of 0.05 C, and one-hour discharge with a cut-off value of 2.0 V were performed.

Next, the same charge and discharge were performed with the charge and discharge rates increased by 0.05 C, and a rate at which charge and discharge were possible without exceeding the cut-off value was regarded as the rate characteristic.

(Intensity evaluation at high temperatures)

An impact was given to the prototyped secondary battery using a thin-film impact testing machine QC-633 (manufactured by Cometech Testing Machines Co., Ltd.) in an environment of 25°C with an impact tip diameter of Φ38.1 mm, a load of 120 g, a height of 150 mm, and a repetition count of one, and then a battery short-circuit test was performed using a tester. Five batteries were prototyped for each example, a total of five impact tests were performed, and the number of batteries in which a short circuit occurred was counted.

Next, the batteries were injected into an impact testing machine and an environmental testing machine set at 60°C and left to stand for two hours, the same test except for the measurement environment was performed, and the number of batteries in which a short circuit occurred in the test at high temperatures was counted.

(Examples 2 to 38)

Polymer electrolytes and secondary batteries according to Examples 2 to 38 were manufactured in the same manner as in Example 1, except that the kinds and parts by mass of the polyol, the isocyanate-terminated prepolymer, the ionic compound, the lithium salt and MEK were changed as shown in Table 7.

[Table 7]

| | Polyol (parts by mass) | | Isocyanate group-terminated prepolymer (parts by mass) | | Ionic compound (parts by mass) | | Lithium salt (parts by mass) | | MEK (parts by mass) |
|---|---|---|---|---|---|---|---|---|---|
| Example 1 | A-1 | 81.1 | B-1 | 75.2 | I-1 | 2.7 | E-1 | 13.6 | 127.5 |
| Example 2 | A-1 | 89.7 | B-1 | 65.7 | I-1 | 0.7 | E-1 | 13.6 | 130.3 |
| Example 3 | A-1 | 64.5 | B-1 | 93.4 | I-1 | 6.5 | E-1 | 13.6 | 122.0 |
| Example 4 | A-2 | 82.6 | B-2 | 73.1 | I-1 | 2.7 | E-1 | 13.6 | 128.1 |
| Example 5 | A-1 | 84.7 | B-3 | 69.8 | I-1 | 2.8 | E-1 | 13.6 | 129.0 |
| Example 6 | A-8 | 85.0 | B-4 | 69.5 | I-1 | 2.7 | E-1 | 13.6 | 129.1 |
| Example 7 | A-3 | 57.6 | B-5 | 108.7 | I-1 | 2.7 | E-1 | 13.6 | 117.4 |
| Example 8 | A-1 | 78.2 | B-1 | 79.3 | I-2 | 2.7 | E-2 | 13.6 | 126.2 |
| Example 9 | A-1 | 85.1 | B-1 | 86.4 | I-2 | 2.9 | E-2 | 1.5 | 124.1 |
| Example 10 | A-1 | 89.1 | B-1 | 65.6 | I-4 | 1.4 | E-1 | 13.6 | 130.3 |
| Example 11 | A-4 | 69.1 | B-6 | 92.3 | I-5 | 2.7 | E-2 | 13.6 | 122.3 |

(continued)

| | Polyol (parts by mass) | | Isocyanate group-terminated prepolymer (parts by mass) | | Ionic compound (parts by mass) | | Lithium salt (parts by mass) | | MEK (parts by mass) |
|---|---|---|---|---|---|---|---|---|---|
| Example 12 | A-9 | 61.3 | B-3 | 103.5 | I-5 | 2.7 | E-2 | 13.6 | 119.0 |
| Example 13 | A-10 | 67.2 | B-7 | 95.0 | I-5 | 2.7 | E-2 | 13.6 | 121.5 |
| Example 14 | A-11 | 53.5 | B-8 | 114.5 | I-5 | 2.7 | E-2 | 13.6 | 114.5 |
| Example 15 | A-4 | 55.0 | B-6 | 107.0 | I-5 | 6.5 | E-2 | 13.6 | 117.9 |
| Example 16 | A-2 | 93.8 | B-2 | 72.0 | I-5 | 1.4 | E-2 | 4.4 | 128.4 |
| Example 17 | A-2 | 92.0 | B-2 | 70.7 | I-5 | 1.4 | E-2 | 7.1 | 128.8 |
| Example 18 | A-2 | 84.0 | B-2 | 64.5 | I-5 | 1.3 | E-2 | 19.6 | 130.6 |
| Example 19 | A-2 | 81.5 | B-2 | 74.6 | I-8 | 2.7 | E-1 | 13.6 | 127.6 |
| Example 20 | A-1 | 82.2 | B-1 | 73.6 | I-9 | 2.7 | E-2 | 13.6 | 127.9 |
| Example 21 | A-1 | 85.0 | B-1 | 71.4 | I-10 | 1.4 | E-1 | 13.6 | 128.6 |
| Example 22 | A-4 | 72.9 | B-6 | 88.8 | I-11 | 1.4 | E-1 | 13.6 | 123.4 |
| Example 23 | A-1 | 76.7 | B-1 | 81.4 | I-3 | 2.7 | E-2 | 13.6 | 125.6 |
| Example 24 | A-5 | 40.4 | B-9 | 133.3 | I-3 | 2.7 | E-2 | 13.6 | 110.0 |
| Example 25 | A-1 | 76.7 | B-1 | 81.4 | I-3 | 2.7 | E-3 | 13.6 | 125.6 |
| Example 26 | A-4 | 66.6 | B-6 | 95.8 | I-6 | 2.7 | E-1 | 13.6 | 121.3 |
| Example 27 | A-4 | 68.8 | B-6 | 92.7 | I-7 | 2.7 | E-2 | 13.6 | 122.2 |
| Example 28 | A-1 | 89.2 | B-1 | 65.5 | I-12 | 1.4 | E-1 | 13.6 | 130.4 |
| Example 29 | A-12 | 80.6 | B-10 | 77.8 | I-12 | 1.4 | E-1 | 13.6 | 126.7 |
| Example 30 | A-11 | 58.6 | B-8 | 109.1 | I-12 | 1.4 | E-1 | 13.6 | 117.3 |
| Example 31 | A-11 | 58.7 | B-8 | 109.1 | I-13 | 1.4 | E-1 | 13.6 | 117.3 |
| Example 32 | A-13 | 65.4 | B-11 | 97.5 | I-1 | 2.7 | E-1 | 13.6 | 120.7 |
| Example 33 | A-13 | 69.2 | B-11 | 92.1 | I-4 | 2.7 | E-2 | 13.6 | 120.5 |
| Example 34 | A-13 | 72.0 | B-11 | 90.0 | I-13 | 1.4 | E-1 | 13.6 | 123.0 |
| Example 35 | A-6 | 76.2 | B-12 | 84.0 | I-13 | 1.4 | E-1 | 13.6 | 124.8 |
| Example 36 | A-7 | 42.1 | B-13 | 130.8 | I-14 | 2.7 | E-4 | 13.6 | 110.8 |
| Example 37 | A-14 | 31.3 | B-14 | 146.3 | I-15 | 2.7 | E-3 | 13.6 | 106.1 |
| Example 38 | A-15 | 37.8 | B-15 | 137.0 | I-16 | 2.7 | E-3 | 13.6 | 108.9 |

2. Configuration in which the polymer electrolyte of the present disclosure is used as a binder for a positive electrode active material

[Example 39]

(Manufacture of negative electrode)

A 20 mm x 20 mm and 60 μm-thick lithium foil (manufactured by Honjo Metal Co., Ltd.) was laminated on a 20 mm x 30 mm and 20 μm-thick copper foil so as to leave a 10 mm non-laminated end portion on one side and press-fitted to manufacture a negative electrode. The thickness of the manufactured negative electrode was 70 μm. A 5 mm-wide copper tab was joined to the negative electrode by performing nickel plating on the non-laminated end portion on one side.

(Solid electrolyte)

A 20 mm x 20 mm and 0.18 mm-thick LICGC (manufactured by Ohara Inc.) sheet was used.

(Manufacture of positive electrode)

18 parts by mass of the electrolyte solution (solid content: 50%) of Example 1 as an active material binder and 5 parts by mass of DENKA BLACK Li-100 (manufactured by Denka Company Limited) as a conductive assistant were mixed with 100 parts by mass of lithium cobaltate (manufactured by Fujifilm Wako Pure Chemical Corporation), and 40 parts by mass of N-methyl pyrrolidone was added thereto and mixed and stirred therewith. Next, the resultant slurry was applied onto a 15 mm x 25 mm and 20 μm-thick rolled aluminum foil so as to leave a 10 mm non-applied end portion on one side, heated at 120°C for one hour, and cured. After being cured, the slurry was pressed to obtain an 80 μm-thick positive electrode. A 5 mm-wide aluminum tab was joined to the non-applied end portion on one side of the positive electrode.

(Manufacture of secondary battery in which polymer electrolyte is used as binder for positive electrode active material)

The positive electrode for which the polymer electrolyte was used as an active material binder was dried in a vacuum at 80°C for 48 hours. After that, the polymer electrolyte film was injected into an argon-substituted glove box (temperature: 25°C, dew point: -70°C), and the positive electrode, the solid electrolyte, and the negative electrode were laminated in order. The laminate was sandwiched between aluminum laminate films and vacuum-packed, thereby obtaining a secondary battery in which the polymer electrolyte of the present disclosure was used as a binder for the positive electrode active material according to Example 38.

[Examples 40 to 43]

Secondary batteries according to Examples 40 to 43 were manufactured in the same manner as in Example 39 except that the electrolyte solution was changed as shown in Table 8.

[Table 8]

| | Polyol (parts by mass) | | Isocyanate group-terminated prepolymer (parts by mass) | | Ionic compound (parts by mass) | | Lithium salt (parts by mass) | | MEK (parts by mass) |
|---|---|---|---|---|---|---|---|---|---|
| Example 39 | A-1 | 81.1 | B-1 | 75.2 | I-1 | 2.7 | E-1 | 13.6 | 127.5 |
| Example 40 | A-2 | 82.6 | B-2 | 73.1 | I-1 | 2.7 | E-1 | 13.6 | 128.1 |
| Example 41 | A-1 | 89.1 | B-1 | 65.6 | I-4 | 1.4 | E-1 | 13.6 | 130.3 |
| Example 42 | A-13 | 65.4 | B-11 | 97.5 | I-1 | 2.7 | E-1 | 13.6 | 120.7 |
| Example 43 | A-13 | 72.0 | B-11 | 90.0 | I-13 | 1.4 | E-1 | 13.6 | 123.0 |

3. Configurations in which the polymer electrolyte of the present disclosure is used as a bulk electrolyte, a binder for a positive electrode active material, and a binder for a negative electrode active material

[Example 44]

(Manufacture of negative electrode)

20 parts by mass of the electrolyte solution (solid content: 50%) of Example 1 as an active material binder and 5 parts by mass of DENKA BLACK Li-100 (manufactured by Denka Company Limited) as a conductive assistant were mixed with 100 parts by mass of a graphite powder (manufactured by Fujifilm Wako Pure Chemical Corporation), and 80 parts by mass of N-methyl pyrrolidone was added thereto and mixed and stirred therewith. Next, the resultant slurry was applied onto a 20 mm x 30 mm and 20 μm-thick copper foil so as to leave a 10 mm non-applied end portion on one side, heated at 120°C for one hour, and cured. After being cured, the slurry was pressed to obtain an 80 μm-thick negative electrode. Negative electrode active material non-applied portions not coated with the negative electrode active material were provided on all of the surfaces of both end portions, and a 5 mm-wide copper current collecting tab on which 5 mm-wide nickel plating had been performed was joined to one negative electrode active material non-applied portion.

(Manufacture of positive electrode)

18 parts by mass of the electrolyte solution (solid content: 50%) of Example 1 as an active material binder and 5 parts by mass of DENKA BLACK Li-100 (manufactured by Denka Company Limited) as a conductive assistant were mixed with 100 parts by mass of lithium cobaltate (manufactured by Fujifilm Wako Pure Chemical Corporation), and 40 parts by mass of N-methyl pyrrolidone was added thereto and mixed and stirred therewith. Next, the resultant slurry was applied onto a 20 μm-thick rolled aluminum foil, heated at 120°C for one hour, and cured. After being cured, the slurry was pressed to obtain an 80 μm-thick positive electrode. Positive electrode active material non-applied portions not coated with the positive electrode active material were provided on all of the surfaces of both end portions, and a 5 mm-wide aluminum current collecting tab was joined to one positive electrode active material non-applied portion.

(Formation of polymer electrolyte layer)

The electrolyte solution of Example 1 was applied to the resultant positive electrode using a bar coater, heated at 120°C for one hour, and cured. The film thickness after curing was 60 μm.

(Manufacture of secondary battery in which polymer electrolytes are used as a bulk electrolyte, a binder for a positive electrode active material, and a binder for a negative electrode active material)

The positive and negative electrodes coated with the polymer electrolyte were dried in a vacuum at 80°C for 48 hours. After that, the polymer electrolyte film was injected into an argon-substituted glove box (temperature: 25°C, dew point: -70°C), and a polyimide sheet blanked into a window frame shape so as to cover the outer circumferential portion of the positive electrode surface was sticked thereto, thereby forming a short-circuit prevention layer. Next, the positive electrode and the negative electrode were laminated together such that the polymer electrolyte layer of the positive electrode coated with the polymer electrolyte and an active material layer of the negative electrode corresponded to each other. The laminate was sandwiched between aluminum laminate films and vacuum-packed, thereby obtaining a secondary battery in which the polymer electrolyte of the present disclosure was used as the bulk electrolyte, the binder for the positive electrode active material, and the binder for the negative electrode active material according to Example 44.

[Examples 45 to 48]

Secondary batteries according to Examples 45 to 48 were manufactured in the same manner as in Example 44 except that the electrolyte solution was changed as shown in Table 9.

[Table 9]

| | Polyol (parts by mass) | | Isocyanate group-terminated prepolymer (parts by mass) | | Ionic compound (parts by mass) | | Lithium salt (parts by mass) | | MEK (parts by mass) |
|---|---|---|---|---|---|---|---|---|---|
| Example 44 | A-1 | 81.1 | B-1 | 75.2 | I-1 | 2.7 | E1 | 13.6 | 127.5 |
| Example 45 | A-2 | 82.6 | B-2 | 73.1 | I-1 | 2.7 | E1 | 13.6 | 128.1 |
| Example 46 | A-1 | 89.1 | B-1 | 65.6 | I-4 | 1.4 | E1 | 13.6 | 130.3 |
| Example 47 | A-13 | 65.4 | B-11 | 97.5 | I-1 | 2.7 | E1 | 13.6 | 120.7 |
| Example 48 | A-13 | 72.0 | B-11 | 90.0 | I-13 | 1.4 | E1 | 13.6 | 123.0 |

(Comparative Example 1)

As materials for an electrolyte, the following materials were stirred and mixed.

| | |
|---|---|
| Polyol A-1 | 92.7 parts by mass |
| Isocyanate-terminated prepolymer B-1 | 62.4 parts by mass |
| Lithium salt E-1 | 13.6 parts by mass |
| Methyl ethyl ketone | 131.3 parts by mass |

Hereinafter, an electrolyte film and a secondary battery according to Comparative Example 1 were manufactured

in the same manner as in Example 1.

(Comparative Examples 2 to 6)

Polymer electrolytes and secondary batteries according to Comparative Examples 2 to 6 were manufactured in the same manner as in Comparative Example 1, except that the kinds and parts by mass of the polyol, the isocyanate-terminated prepolymer, the ionic compound, the lithium salt and MEK were changed as shown in Table 10.

[Comparative Examples 7 to 9]

Secondary batteries according to Comparative Examples 7 to 9 were manufactured in the same manner as in Example 38 except that the electrolyte solution was changed as shown in Table 10.

[Comparative Examples 10 to 12]

Secondary batteries according to Comparative Examples 10 to 12 were manufactured in the same manner as in Example 44 except that the electrolyte solution was changed as shown in Table 10.

[Table 10]

| | Polyol (parts by mass) | | Isocyanate group-terminated prepolymer (parts by mass) | | Ionic compound (parts by mass) | | Lithium salt (parts by mass) | | MEK (parts by mass) |
|---|---|---|---|---|---|---|---|---|---|
| Comparative Example 1 | A-1 | 92.7 | B-1 | 62.4 | - | - | E-1 | 13.6 | 131.3 |
| Comparative Example 2 | A-1 | 100.9 | B-1 | 68.0 | - | - | E-1 | 1.5 | 129.6 |
| Comparative Example 3 | A-5 | 47.1 | B-9 | 127.5 | - | - | E-1 | 13.6 | 111.7 |
| Comparative Example 4 | A-5 | 45.0 | B-9 | 122.0 | - | - | E-2 | 196 | 113.4 |
| Comparative Example 5 | A-6 | 48.5 | B-12 | 125.6 | - | - | E-2 | 13.6 | 112.3 |
| Comparative Example 6 | A-1 | 126.6 | D-2 | 7.1 | I-13 | 2.7 | E-2 | 13.6 | 150.0 |
| Comparative Example 7 | A-1 | 92.7 | B-1 | 62.4 | - | - | E-1 | 13.6 | 131.3 |
| Comparative Example 8 | A-5 | 45.0 | B-9 | 122.0 | - | - | E-2 | 19.6 | 113.4 |
| Comparative Example 9 | A-1 | 126.6 | D-2 | 7.1 | I-13 | 2.7 | E-2 | 13.6 | 150.0 |
| Comparative Example 10 | A-1 | 92.7 | B-1 | 62.4 | - | - | E-1 | 13.6 | 131.3 |
| Comparative Example 11 | A-5 | 45.0 | B-9 | 122.0 | - | - | E-2 | 19.6 | 113.4 |
| Comparative Example 12 | A-1 | 126.6 | D-2 | 7.1 | I-13 | 2.7 | E-2 | 13.6 | 150.0 |

The resultant polymer electrolytes and secondary batteries according to Examples 2 to 48 and Comparative Examples 1 to 12 were evaluated in the same manner as in Example 1. The evaluation results are shown in Tables 11 to 14.

[Table 11]

| | | Volume expansion rate (%) | Ion conductivity (S/cm) | | Rate characteristics | | Impact resistance test Number of times of short-circuit in secondary battery | |
|---|---|---|---|---|---|---|---|---|
| | | | 25℃ | 5℃ | During charge | During discharge | 25℃ | 60℃ |
| Example | 1 | 74.4 | $4.87\times10^{-4}$ | $1.14\times10^{-4}$ | 0.50C | 0.50C | 0/5 | 0/5 |
| | 2 | 76.5 | $1.15\times10^{-4}$ | $1.96\times10^{-5}$ | 0.40C | 0.40C | 0/5 | 0/5 |
| | 3 | 71.4 | $1.01\times10^{-4}$ | $2.13\times10^{-5}$ | 0.40C | 0.40C | 0/5 | 0/5 |
| | 4 | 74.5 | $4.25\times10^{-4}$ | $1.07\times10^{-4}$ | 0.45C | 0.50C | 0/5 | 0/5 |
| | 5 | 70.2 | $2.78\times10^{-4}$ | $4.27\times10^{-5}$ | 0.40C | 0.40C | 0/5 | 0/5 |
| | 6 | 74.4 | $2.11\times10^{-4}$ | $3.71\times10^{-5}$ | 0.40C | 0.45C | 0/5 | 0/5 |
| | 7 | 42.7 | $8.57\times10^{-5}$ | $1.03\times10^{-5}$ | 0.50C | 0.45C | 0/5 | 0/5 |
| | 8 | 73.2 | $4.09\times10^{-4}$ | $9.11\times10^{-5}$ | 0.45C | 0.45C | 0/5 | 0/5 |
| | 9 | 73.3 | $7.27\times10^{-5}$ | $1.07\times10^{-5}$ | 0.35C | 0.35C | 0/5 | 0/5 |
| | 10 | 78.0 | $4.31\times10^{-4}$ | $9.93\times10^{-5}$ | 0.45C | 0.45C | 0/5 | 0/5 |
| | 11 | 58.0 | $3.89\times10^{-4}$ | $9.79\times10^{-5}$ | 0.50C | 0.50C | 0/5 | 0/5 |
| | 12 | 50.5 | $2.69\times10^{-4}$ | $5.83\times10^{-5}$ | 0.45C | 0.40C | 0/5 | 0/5 |
| | 13 | 58.1 | $2.51\times10^{-4}$ | $7.99\times10^{-5}$ | 0.40C | 0.40C | 0/5 | 0/5 |
| | 14 | 50.4 | $1.75\times10^{-4}$ | $6.05\times10^{-5}$ | 0.40C | 0.40C | 0/5 | 0/5 |
| | 15 | 54.6 | $1.08\times10^{-4}$ | $3.85\times10^{-5}$ | 0.35C | 0.40C | 0/5 | 0/5 |
| | 16 | 75.4 | $9.04\times10^{-5}$ | $2.97\times10^{-5}$ | 0.35C | 0.35C | 0/5 | 0/5 |
| | 17 | 75.5 | $4.04\times10^{-4}$ | $9.88\times10^{-5}$ | 0.45C | 0.45C | 0/5 | 0/5 |
| | 18 | 75.4 | $8.97\times10^{-5}$ | $1.78\times10^{-5}$ | 0.35C | 0.35C | 0/5 | 0/5 |
| | 19 | 73.8 | $3.09\times10^{-4}$ | $7.22\times10^{-5}$ | 0.45C | 0.45C | 0/5 | 0/5 |
| | 20 | 74.9 | $2.99\times10^{-4}$ | $3.89\times10^{-5}$ | 0.45C | 0.45C | 0/5 | 0/5 |
| | 21 | 70.1 | $5.81\times10^{-5}$ | $9.78\times10^{-6}$ | 0.30C | 0.30C | 0/5 | 0/5 |
| | 22 | 53.9 | $5.07\times10^{-5}$ | $8.90\times10^{-6}$ | 0.30C | 0.30C | 0/5 | 0/5 |
| | 23 | 72.7 | $2.77\times10^{-5}$ | $5.87\times10^{-6}$ | 0.30C | 0.30C | 0/5 | 0/5 |
| | 24 | 35.1 | $7.84\times10^{-6}$ | $9.48\times10^{-7}$ | 0.25C | 0.25C | 0/5 | 0/5 |
| | 25 | 72.8 | $1.97\times10^{-5}$ | $6.27\times10^{-6}$ | 0.30C | 0.30C | 0/5 | 0/5 |
| | 26 | 57.1 | $2.13\times10^{-5}$ | $5.11\times10^{-6}$ | 0.30C | 0.30C | 0/5 | 0/5 |
| | 27 | 57.1 | $3.12\times10^{-5}$ | $4.99\times10^{-6}$ | 0.30C | 0.30C | 0/5 | 0/5 |
| | 28 | 79.8 | $1.11\times10^{-5}$ | $3.15\times10^{-6}$ | 0.25C | 0.30C | 0/5 | 0/5 |
| | 29 | 60.6 | $9.14\times10^{-6}$ | $2.05\times10^{-6}$ | 0.25C | 0.25C | 0/5 | 0/5 |
| | 30 | 53.6 | $8.02\times10^{-6}$ | $1.40\times10^{-6}$ | 0.25C | 0.25C | 0/5 | 0/5 |
| | 31 | 53.8 | $5.44\times10^{-6}$ | $8.08\times10^{-7}$ | 0.20C | 0.25C | 0/5 | 0/5 |
| | 32 | 42.6 | $4.84\times10^{-6}$ | $7.10\times10^{-7}$ | 0.20C | 0.20C | 0/5 | 0/5 |
| | 33 | 42.3 | $4.24\times10^{-6}$ | $6.99\times10^{-7}$ | 0.20C | 0.20C | 0/5 | 0/5 |
| | 34 | 43.8 | $3.14\times10^{-6}$ | $4.28\times10^{-7}$ | 0.20C | 0.15C | 0/5 | 0/5 |
| | 35 | 65.9 | $2.61\times10^{-6}$ | $4.09\times10^{-7}$ | 0.15C | 0.20C | 0/5 | 0/5 |
| | 36 | 36.2 | $2.45\times10^{-6}$ | $3.49\times10^{-7}$ | 0.15C | 0.15C | 0/5 | 0/5 |
| | 37 | 30.4 | $1.04\times10^{-6}$ | $1.09\times10^{-7}$ | 0.15C | 0.15C | 0/5 | 0/5 |
| | 38 | 30.2 | $1.17\times10^{-6}$ | $1.82\times10^{-7}$ | 0.15C | 0.15C | 0/5 | 0/5 |

[Table 12]

| | | Volume expansion rate (%) | Ion conductivity (S/cm) | | Rate characteristics | | Impact resistance test Number of times of short-circuit in secondary battery | |
|---|---|---|---|---|---|---|---|---|
| | | | 25℃ | 5℃ | During charge | During discharge | 25℃ | 60℃ |
| Comparative Example | 1 | 80.1 | $9.47\times10^{-7}$ | $8.87\times10^{-8}$ | 0.05C | 0.05C | 0/5 | 0/5 |
| | 2 | 80.2 | $8.05\times10^{-7}$ | $7.74\times10^{-8}$ | 0.05C | 0.05C | 0/5 | 0/5 |
| | 3 | 36.2 | $7.19\times10^{-7}$ | $3.10\times10^{-8}$ | 0.05C> | - | 0/5 | 0/5 |
| | 4 | 35.9 | $7.99\times10^{-7}$ | $2.94\times10^{-8}$ | 0.05C> | - | 0/5 | 0/5 |
| | 5 | 66.1 | $6.32\times10^{-7}$ | $1.39\times10^{-8}$ | 0.05C> | - | 0/5 | 0/5 |
| | 6 | - (Dissolved) | $7.47\times10^{-6}$ | $1.02\times10^{-6}$ | 0.20C | 0.20C | 0/5 | 5/5 |

[Table 13]

| | Polymer electrolyte | Site where polymer electrolyte is used | Rate characteristics | | Impact resistance test Number of times of short-circuit in secondary battery | |
|---|---|---|---|---|---|---|
| | | | During charge | During discharge | 25°C | 60°C |
| Example 39 | Same as in Example 1 | Positive electrode active material binder | 0.50C | 0.50C | 0/5 | 0/5 |
| Example 40 | Same as in Example 4 | | 0.50C | 0.50C | 0/5 | 0/5 |
| Example 41 | Same as in Example 10 | | 0.50C | 0.50C | 0/5 | 0/5 |
| Example 42 | Same as in Example 32 | | 0.20C | 0.20C | 0/5 | 0/5 |
| Example 43 | Same as in Example 34 | | 0.20C | 0.20C | 0/5 | 0/5 |
| Example 44 | Same as in Example 1 | Bulk electrolyte | 0.60C | 0.55C | 0/5 | 0/5 |
| Example 45 | Same as in Example 4 | | 0.60C | 0.55C | 0/5 | 0/5 |
| Example 46 | Same as in Example 10 | Positive electrode active material binder | 0.55C | 0.55C | 0/5 | 0/5 |
| Example 47 | Same as in Example 32 | Negative electrode active material binder | 0.25C | 0.25C | 0/5 | 0/5 |
| Example 48 | Same as in Example 34 | | 0.20C | 0.20C | 0/5 | 0/5 |

[Table 14]

| | Polymer electrolyte | Site where polymer electrolyte is used | Rate characteristics | | Impact resistance test Number of times of short-circuit in secondary battery | |
|---|---|---|---|---|---|---|
| | | | During charge | During discharge | 25°C | 60°C |
| Comparative Example 7 | Same as in Comparative Example 1 | Positive electrode active material binder | 0.05C | 0.05C | 0/5 | 0/5 |
| Comparative Example 8 | Same as in Comparative Example 4 | | 0.05C> | - | 0/5 | 0/5 |
| Comparative Example 9 | Same as in Comparative Example 6 | | 0.20C | 0.20C | 0/5 | 5/5 |
| Comparative Example 10 | Same as in Comparative Example 1 | Bulk electrolyte | 0.05C | 0.05C | 0/5 | 0/5 |
| Comparative Example 11 | Same as in Comparative Example 4 | Positive electrode active material binder | 0.05C> | - | 0/5 | 0/5 |
| Comparative Example 12 | Same as in Comparative Example 6 | Negative electrode active material binder | 0.25C | 0.25C | 0/5 | 5/5 |

The polymer electrolytes of Examples 1 to 38 have a cationic structure in the molecule of the polyurethane and thus exhibit high ion conductivity both at 25°C and at 5°C. In addition, the secondary batteries in which the polymer electrolytes are used as the bulk electrolytes also have high rate characteristics and high impact resistance at high temperatures.

Furthermore, Examples 1 to 31 in which the average number of moles $m^1$ of the ethylene oxide structure represented by the formula (7) added and the average number of moles $n^1$ of the propylene oxide structure represented by the formula (8) added in the polyurethane satisfied $n^1 \leq m^1 \leq 9n^1$ exhibited higher ion conductivity and had favorable rate characteristics of the secondary batteries.

On the other hand, in the polymer electrolytes according to Comparative Examples 1 to 5 having no cationic structures in the molecule of the polyurethane, the ion conductivity was low, and the rate characteristics of the secondary batteries were also low. Upon measurement of the volume expansion rate, in Comparative Example 6 in which the polyurethane was dissolved, the ion conductivity was high, but a decrease in impact resistance at high temperatures of the secondary battery was observed. This is believed to be because the polyurethane according to Comparative Example 6 does not have any three-dimensional cross-linked structures.

In Examples 39 to 48 as well in which the site where the polymer electrolyte was used in the secondary battery was changed, the polyurethane having a three-dimensional cross-linked structure had a cationic structure in the molecule, and the secondary batteries also had rate characteristics and high impact resistance at high temperatures. On the other hand, in Comparative Examples 7, 8, 10, and 11 in which there were no cationic structures in the polymer structure, the ion conductivity was low, and the rate characteristics of the secondary batteries were also low even when the site of use in the secondary battery was changed. In Comparative Examples 9 and 12 in which the polyurethane did not have any three-dimensional cross-linked structure, no significant decreases in impact resistance of the secondary batteries at high temperatures were observed.

The present disclosure is not limited by the embodiments, and can be variously changed and modified without departing from the spirit and the scope of the present disclosure. Therefore, in order to make the scope of the present disclosure public, the following claims are appended.

The present application claims the priority based on Japanese Patent Application No. 2022-188750 filed on 25 November 2022, the entire contents of which are herein incorporated by reference.

REFERENCE SIGNS LIST

1 : Secondary battery, 2 : Positive electrode current collector, 3 : Positive electrode active material, 4 : Binder for positive electrode active material, 5 : Conductive assistant, 6 : Positive electrode, 7 : Bulk electrolyte, 8 : Negative electrode active material, 9 : Negative electrode current collector, 10 : Negative electrode, 11 : Binder for negative electrode active material

## Claims

1. A polymer electrolyte, wherein

   the polymer electrolyte comprising a polyurethane, a lithium salt and an anion, and
   the polyurethane has a three-dimensional cross-linked structure and has a cationic structure in a molecule.

2. The polymer electrolyte according to claim 1, wherein the polymer electrolyte has a volume expansion rate by a methyl ethyl ketone immersion method of 30.0 to 100.0%.

3. The polymer electrolyte according to claim 1 or 2, wherein the cationic structure has at least one selected from the group consisting of a cationic nitrogen-comprising heterocyclic structure and an ammonium cation with a linear or branched structure.

4. The polymer electrolyte according to any one of claims 1 to 3, wherein the cationic structure is a cationic nitrogen-comprising heterocyclic structure.

5. The polymer electrolyte according to claim 3 or 4, wherein the cationic nitrogen-comprising heterocyclic structure comprises at least one selected from the group consisting of an imidazolium cation, a pyridinium cation, a pyrazinium cation, a pyrrolidinium cation, and a piperazinium cation.

6. The polymer electrolyte according to claim 3, wherein the ammonium cation with the linear or branched structure is a quaternary ammonium cation.

7. The polymer electrolyte according to any one of claims 1 to 6, wherein the cationic structure comprises at least one structure selected from the group consisting of structures represented by following formulae (1) to (6):

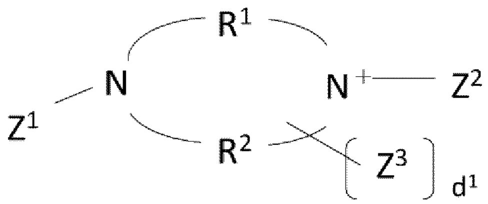

(1)

(in formula (1),

$d^1$ represents an integer of 0 to 3,
$R^1$ and $R^2$ represent hydrocarbon groups that form a five-membered nitrogen-comprising aromatic heterocyclic structure with a nitrogen atom,
$Z^1$ and $Z^2$ each independently represent a structure represented by following formula (X), a hydrogen atom, a hydroxyl group, a hydrocarbon group having 1 to 4 carbon atoms, or a hydrocarbon group having 1 to 4 carbon atoms that has a hydroxyl group,
$Z^3$ represents the structure represented by following formula (X), a hydroxyl group, a hydrocarbon group having 1 to 4 carbon atoms, or a hydrocarbon group having 1 to 4 carbon atoms that has a hydroxyl group, and
at least one selected from the group consisting of $Z^1$, $Z^2$ and at least one $Z^3$, in a case where $d^1$ is 1 or more, is the structure represented by following formula (X))

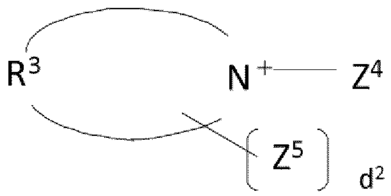

(2)

(in formula (2),

$d^2$ represents an integer of 0 to 5,
$R^3$ represents a hydrocarbon group that forms a nitrogen-comprising aromatic heterocyclic structure with a nitrogen atom,
$Z^4$ represents the structure represented by following formula (X), a hydrogen atom, a hydroxyl group, a hydrocarbon group having 1 to 4 carbon atoms, or a hydrocarbon group having 1 to 4 carbon atoms that has a hydroxyl group,
$Z^5$ represents the structure represented by following formula (X), a hydroxyl group, a hydrocarbon group having 1 to 4 carbon atoms, or a hydrocarbon group having 1 to 4 carbon atoms that has a hydroxyl group, and at least one selected from the group consisting of $Z^4$ and at least one $Z^5$, in a case where $d^2$ is 1 or more, is the structure represented by the following formula (X))

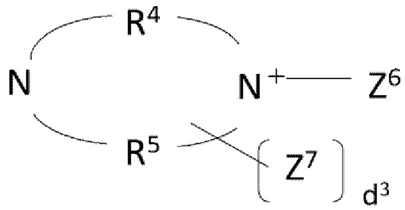

(3)

(in formula (3),

$d^3$ represents an integer of 0 to 4,
$R^4$ and $R^5$ represent hydrocarbon groups that form a six-membered nitrogen-comprising aromatic heterocyclic structure with a nitrogen atom,
$Z^6$ represents the structure represented by following formula (X), a hydrogen atom, a hydroxyl group, a hydrocarbon group having 1 to 4 carbon atoms, or a hydrocarbon group having 1 to 4 carbon atoms that has a hydroxyl group,
$Z^7$ represents the structure represented by following formula (X), a hydroxyl group, a hydrocarbon group having 1 to 4 carbon atoms, or a hydrocarbon group having 1 to 4 carbon atoms that has a hydroxyl group, and
at least one selected from the group consisting of $Z^6$ and at least one $Z^7$, in a case where $d^3$ is 1 or more, is the structure represented by the following formula (X))

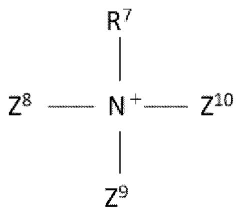

(4)

(in formula (4), $R^7$ represents a hydrogen atom or a hydrocarbon group having 1 to 4 carbon atoms, $Z^8$ to $Z^{10}$ each independently represent the structure represented by following formula (X), a hydrogen atom, a hydroxyl group, a hydrocarbon group having 1 to 4 carbon atoms, or a hydrocarbon group having 1 to 4 carbon atoms that has a hydroxyl group, and at least one selected from the group consisting of $Z^8$ to $Z^{10}$ is the structure represented by following formula (X))

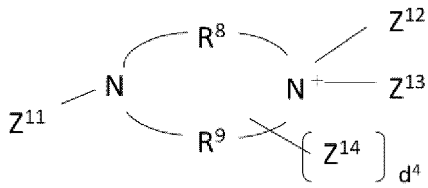

(5)

(in formula (5),

$d^4$ represents an integer of 0 to 4,
$R^8$ and $R^9$ represent hydrocarbon groups that form a nitrogen-comprising aliphatic heterocyclic structure with a nitrogen atom,
$Z^{11}$ to $Z^{13}$ each independently represent the structure represented by following formula (X), a hydrogen atom, a hydroxyl group, a hydrocarbon group having 1 to 4 carbon atoms, or a hydrocarbon group having 1 to 4 carbon atoms that has a hydroxyl group,
$Z^{14}$ is each independently represent the structure represented by following formula (X), a hydroxyl group, a hydrocarbon group having 1 to 4 carbon atoms, or a hydrocarbon group having 1 to 4 carbon atoms that has a hydroxyl group, and
at least one selected from the group consisting of $Z^{11}$ to $Z^{13}$ and at least one $Z^{14}$, in a case where $d^4$ is 1 or more, is the structure represented by following formula (X))

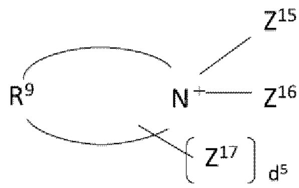

(6)

(in formula (6),

$d^5$ represents an integer of 0 to 4,
$R^9$ represents a hydrocarbon group that forms a nitrogen-comprising aliphatic heterocyclic structure with a nitrogen atom,
$Z^{15}$ and $Z^{16}$ each independently represent the structure represented by following formula (X), a hydrogen atom, a hydroxyl group, a hydrocarbon group having 1 to 4 carbon atoms, or a hydrocarbon group having 1 to 4 carbon atoms that has a hydroxyl group,
$Z^{17}$ is each independently represent the structure represented by following formula (X), a hydroxyl group, a hydrocarbon group having 1 to 4 carbon atoms, or a hydrocarbon group having 1 to 4 carbon atoms that has a hydroxyl group, and
at least one selected from the group consisting of $Z^{15}$, $Z^{16}$ and at least one $Z^{17}$, in a case where $d^5$ is 1 or more, is the structure represented by following formula (X))

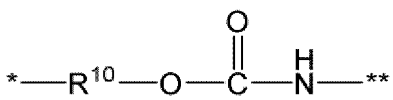

(X)

(in formula (X), $R^{10}$ represents a linear or branched divalent hydrocarbon group, a symbol "*" represents a bonding portion to a nitrogen atom in formulae (1) to (6) or a bonding portion to a carbon atom in the nitrogen-comprising heterocyclic structure in formulae (1) to (3) and formulae (5) and (6), and a symbol "**" represents a bonding portion to a carbon atom in a polymer chain that configures polyurethane having a cationic structure).

**8.** The polymer electrolyte according to any one of claims 1 to 7, wherein the polyurethane has at least an ethylene oxide structure represented by following formula (7) between a first urethane bond and a second urethane bond that are adjacent to each other.

$$-(CH_2-CH_2-O)- \quad (7)$$

**9.** The polymer electrolyte according to claim 8, further comprising a propylene oxide structure represented by following formula (8) between the first urethane bond and the second urethane bond.

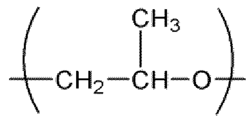
(8)

**10.** The polymer electrolyte according to claim 9, wherein an average number of moles added $m^1$ of the ethylene oxide structure and an average number of moles added $n^1$ of the propylene oxide structure are each independently a natural number of 1 or more, and $n^1 \leq m^1 \leq 9n^1$.

**11.** The polymer electrolyte according to any one of claims 1 to 10, wherein the polymer electrolyte is a dry polymer electrolyte.

**12.** A polymer electrolyte being a cured product of a mixture comprising:

at least one polyol;
at least one isocyanate compound;
an anion;
an ionic compound having a functional group capable of reacting with an isocyanate group and comprising a cationic structure; and
a lithium salt,
wherein the mixture comprises:
at least one selected from the group consisting of:

a polyol having at least three hydroxyl groups as the at least one polyol, and
an isocyanate compound having at least three isocyanate groups as the at least one isocyanate compound.

**13.** The polymer electrolyte according to claim 12, wherein the mixture comprises a polyol having the ethylene oxide structure represented by following formula (7) and the propylene oxide structure represented by following formula (8) and having a molecular weight of 3000 to 5000, as the at least one polyol, and
a urethane prepolymer as the at least one isocyanate compound.

$$-(CH_2-CH_2-O)- \quad (7)$$

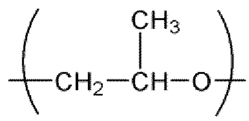
(8)

**14.** An electrode active material binder comprising the polymer electrolyte according to any one of claims 1 to 13.

**15.** A secondary battery comprising a positive electrode, a negative electrode and a bulk electrolyte disposed between the positive electrode and the negative electrode, wherein at least one selected from the group consisting of the positive electrode, the negative electrode, and the electrolyte comprises the polymer electrolyte according to any one of claims 1 to 13.

**16.** The secondary battery according to claim 15, wherein the positive electrode comprises a positive electrode active material and a binder for the positive electrode active material, and the binder comprises the polymer electrolyte.

**17.** The secondary battery according to claim 15 or 16, wherein the negative electrode comprises a negative electrode active material and a binder for the negative electrode active material, and the binder comprises the polymer

electrolyte.

**18.** The secondary battery according to any one of claims 15 to 17, wherein the bulk electrolyte comprises the polymer electrolyte.

**19.** The secondary battery according to any one of claims 15 to 18, wherein the secondary battery is an all-solid-state secondary battery.

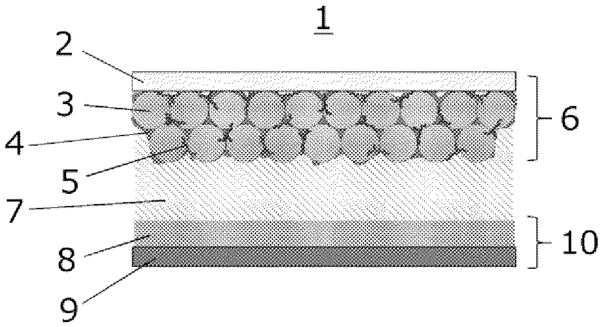


FIG. 1

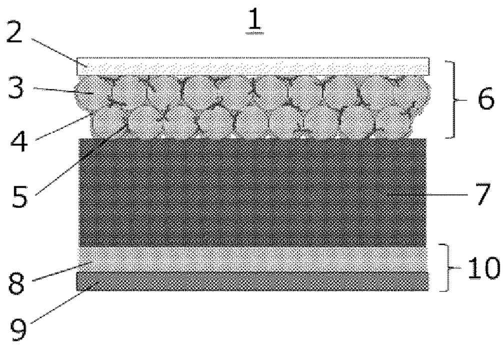


FIG. 2

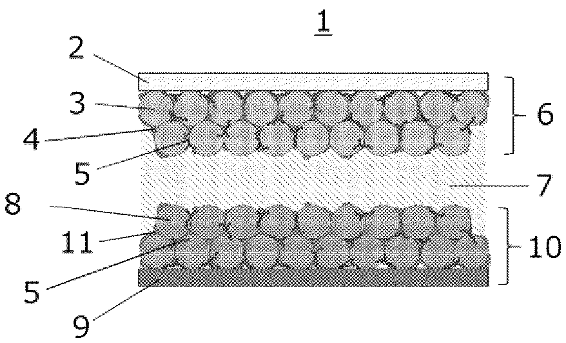


FIG. 3

## INTERNATIONAL SEARCH REPORT

International application No. **PCT/JP2023/041952**

**A. CLASSIFICATION OF SUBJECT MATTER**

***H01B 1/06***(2006.01)i; ***C08G 18/08***(2006.01)i; ***C08K 3/08***(2006.01)i; ***C08L 75/04***(2006.01)i; ***H01M 4/62***(2006.01)i; ***H01M 10/052***(2010.01)i; ***H01M 10/0565***(2010.01)i
FI: H01B1/06 A; C08G18/08 009; C08L75/04; C08K3/08; H01M4/62 Z; H01M10/0565; H01M10/052

According to International Patent Classification (IPC) or to both national classification and IPC

**B. FIELDS SEARCHED**

Minimum documentation searched (classification system followed by classification symbols)

H01B1/06; C08G18/08; C08K3/08; C08L75/04; H01M4/62; H01M10/052; H01M10/0565

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/020827 A1 (FUJIFILM CORPORATION) 01 February 2018 (2018-02-01) paragraphs [0016]-[0207], fig. 1 | 1, 11, 14-19 |
| A | paragraphs [0016]-[0207], fig. 1 | 2-10, 12-13 |
| A | WO 2019/017311 A1 (FUJIFILM CORPORATION) 24 January 2019 (2019-01-24) paragraphs [0012]-[0177], fig. 1 | 2-10, 12-13 |
| A | WO 2017/209233 A1 (FUJIFILM CORPORATION) 07 December 2017 (2017-12-07) paragraphs [0015]-[0203], fig. 1 | 2-10, 12-13 |

☐ Further documents are listed in the continuation of Box C.

☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 January 2024** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/041952**

| Patent document cited in search report | Publication date (day/month/year) | Patent family member(s) | Publication date (day/month/year) |
|---|---|---|---|
| WO 2018/020827 A1 | 01 February 2018 | US 2019/0157710 A1<br>paragraphs [0072]-[05666], fig. 1<br>EP 3493317 A1<br>CN 109526241 A | |
| WO 2019/017311 A1 | 24 January 2019 | US 2020/0153042 A1<br>paragraphs [0046]-[0468], fig. 1<br>CN 110998953 A | |
| WO 2017/209233 A1 | 07 December 2017 | US 2019/0097268 A1<br>paragraphs [0041]-[0399], fig. 1<br>CN 109478685 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016069388 A
- JP 2022188750 A